(19) Europäisches Patentamt
European Patent Office
Office européen des brevets

(11) **EP 4 693 052 A1**

(12) **EUROPEAN PATENT APPLICATION**
published in accordance with Art. 153(4) EPC

(43) Date of publication:
**11.02.2026 Bulletin 2026/07**

(51) International Patent Classification (IPC):
***G06F 12/06*** (2006.01)

(21) Application number: **24806139.2**

(52) Cooperative Patent Classification (CPC):
**G06F 12/06; G06F 12/1009**

(22) Date of filing: **29.02.2024**

(86) International application number:
**PCT/CN2024/079212**

(87) International publication number:
**WO 2024/234778 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023 CN 202310545650**

(71) Applicant: **Huawei Technologies Co., Ltd.
Shenzhen, Guangdong 518129 (CN)**

(72) Inventors:
• **WANG, Shiwei
Shenzhen, Guangdong 518129 (CN)**
• **LI, Haicheng
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **MEMORY MANAGEMENT METHOD AND COMPUTER DEVICE**

(57) This application provides a memory management method. The method includes: dividing a physical memory into N first physical pages based on a first granularity, and creating N pieces of first page frame metadata corresponding to the N first physical pages, where the first granularity is greater than a minimum granularity supported by a computer device; determining, based on a request of a first process, a size of a physical memory required by the first process; and choosing, based on the size of the physical memory required by the first process, to allocate O first physical pages to the first process at the first granularity, or choosing to allocate Q second physical pages to the first process at a second granularity, or choosing to allocate W first physical pages to the first process at the first granularity and allocate T second physical pages to the first process at the second granularity. In this application, the page frame metadata is created for the physical memory based on a huge page granularity, and then whether to further refine the physical page is determined based on the size of the physical memory required by the first process, so that management overheads of the page frame metadata can be reduced.

Divide a physical memory into N first physical pages based on a first granularity, and create N pieces of first page frame metadata — S1001

Determine, based on a request of a first process, a size of a physical memory required by the first process — S1002

Choose, based on the size of the physical memory required by the first process, to allocate O first physical pages to the first process at the first granularity, or choose to allocate Q second physical pages to the first process at a second granularity, or choose to allocate W first physical pages to the first process at the first granularity and allocate T second physical pages to the first process at the second granularity, where the second granularity is less than the first granularity, and the second granularity is greater than or equal to a minimum granularity supported by a computer device — S1003

FIG. 10

## Description

This application claims priority to Chinese Patent Application No. 202310545650.3, filed with the China National Intellectual Property Administration on May 15, 2023 and entitled "MEMORY MANAGEMENT METHOD AND COMPUTER DEVICE", which is incorporated herein by reference in its entirety.

## TECHNICAL FIELD

This application relates to the computer field, and more specifically, to a memory management method and a computer device.

## BACKGROUND

A memory of a computer system is usually managed on a per-physical-page basis, and a size of one physical page is usually 4K. When the computer system is started, a physical page is divided based on a minimum granularity supported by hardware, page frame metadata is created, and then a physical memory is managed by using the page frame metadata. In this manner of statically creating the page frame metadata, performance overheads are low. However, there is the following problem: When a computer performs memory management in this manner, management overheads that are in direct proportion to a total physical memory size are generated. For example, if a size of a basic page is 4 KB and a size of page frame metadata is 64 bytes, memory management overheads of the computer are about 64/(4*1024)=1.5%. In a huge page scenario, memory management overheads are determined by a basic page. For example, if a size of the basic page is 4 KB, a size of the huge page is 2 MB, a size of the page frame metadata is 64 bytes, and the huge page includes 512 basic pages, and correspondingly includes 512 pieces of page frame metadata, after combination, 511 pieces of page frame metadata are wasted, and a waste rate reaches 99.8%. In view of this, a memory management method is urgently needed, so that a waste of page frame metadata can be reduced, and allocation requirements of different granularities can be met.

## SUMMARY

This application provides a memory management method and a computer device. Page frame metadata may be first created for a physical memory based on a huge page granularity, and then whether to further refine a physical page is determined based on a size of a physical memory required by a first process, so that management overheads of the page frame metadata can be reduced, and a physical page that meets a granularity of the first process can be quickly allocated.

According to a first aspect, a memory management method is provided. The method is applied to a computer device, and the method includes: dividing physical memory into N first physical pages based on a first granularity, and creating N pieces of first page frame metadata corresponding to the N first physical pages, where the first granularity is greater than a minimum granularity supported by the computer device, N≥1 and is an integer, and each of the N pieces of first page frame metadata includes a first field to indicate a size of a corresponding first physical page; determining, based on a request of a first process, a size of a physical memory required by the first process; and choosing, based on the size of the physical memory required by the first process, to allocate O first physical pages to the first process at the first granularity, or choosing to allocate Q second physical pages to the first process at a second granularity, or choosing to allocate W first physical pages to the first process at the first granularity and allocate T second physical pages to the first process at the second granularity, where the second granularity is less than the first granularity, the second granularity is greater than or equal to the minimum granularity supported by the computer device, N≥O≥1, O is an integer, Q≥1, Q is an integer, N≥W≥1, W is an integer, T≥1, and T is an integer.

In this embodiment of this application, the page frame metadata is first created for the physical memory based on a huge page granularity, and then whether to further refine the physical page is determined based on the size of the physical memory required by the first process, so that management overheads of the page frame metadata can be reduced, and a physical page that meets a granularity of the first process can be quickly allocated.

With reference to the first aspect, in some implementations of the first aspect, choosing to allocate the Q second physical pages to the first process at the second granularity includes: selecting M first physical pages from the N first physical pages, where N≥M≥1, and M is an integer; and converting the M first physical pages into P second physical pages based on the second granularity, and creating P pieces of corresponding second page frame metadata, where P>M≥1, P is an integer, and each of the P pieces of second page frame metadata includes a first field to indicate a size of a corresponding second physical page; and selecting the Q second physical pages from the P second physical pages, and allocating the Q second physical pages to the first process.

With reference to the first aspect, in some implementations of the first aspect, each of the N pieces of first page frame metadata includes a second field to indicate that the N pieces of first page frame metadata are valid page frame metadata; and after converting the M first physical pages into the P second physical pages based on the second granularity, the method further includes: changing a value of a second field of each of M pieces of first page frame metadata corresponding to the M first physical pages, to indicate that the M first physical pages are invalid page frame metadata.

With reference to the first aspect, in some implementations of the first aspect, the method further includes: when detecting that a first preset condition is met, reclaiming the Q second physical pages; re-converting the P second physical pages into the M first physical pages, and releasing the P pieces of second page frame metadata; and changing the value of the second field of each of the M pieces of first page frame metadata corresponding to the M first physical pages, to indicate that the M first physical pages are valid page frame metadata.

With reference to the first aspect, in some implementations of the first aspect, choosing to allocate the W first physical pages to the first process at the first granularity and allocate the T second physical pages to the first process at the second granularity includes: selecting the W first physical pages from the N first physical pages, and allocating the W first physical pages to the first process, where $N \geq W \geq 1$, and W is an integer; selecting S first physical pages from N-W first physical pages, where $N-W \geq S \geq 1$, and S is an integer; converting the S first physical pages into D second physical pages based on the second granularity, and creating D pieces of corresponding second page frame metadata, where $D > S > 1$, D is an integer, and each of the D pieces of second page frame metadata includes a first field to indicate a size of a corresponding second physical page; and selecting the T second physical pages from the D second physical pages, and allocating the T second physical pages to the first process.

With reference to the first aspect, in some implementations of the first aspect, each of the N pieces of first page frame metadata includes the second field to indicate that the N pieces of first page frame metadata are the valid page frame metadata; and before choosing to allocate the O first physical pages to the first process at the first granularity, the method further includes: converting the N first physical pages into L physical blocks by using a buddy algorithm, where the L physical blocks correspond to L pieces of third page frame metadata, each of the L pieces of third page frame metadata includes a first field to indicate a size of a corresponding physical block, and each of the L pieces of third page frame metadata includes a second field to indicate that each piece of third page frame metadata is valid page frame metadata; and choosing to allocate the O first physical pages to the first process at the first granularity includes: selecting a first physical block from the L physical blocks, and allocating the first physical block to the first process, where the first physical block includes the O first physical pages.

With reference to the first aspect, in some implementations of the first aspect, the L pieces of third page frame metadata are obtained based on L pieces of first page frame metadata in the N pieces of first page frame metadata, and the method further includes: changing a value of a second field of each of N-L pieces of first page frame metadata, to indicate that the N-L pieces of first page frame metadata are invalid page frame metadata.

With reference to the first aspect, in some implementations of the first aspect, each of the P pieces of second page frame metadata includes a second field to indicate that the P pieces of second page frame metadata are valid page frame metadata; and before selecting the Q second physical pages from the P second physical pages, and allocating the Q second physical pages to the first process, the method further includes: converting the P second physical pages into R physical blocks by using a buddy algorithm, where the R physical blocks correspond to R pieces of fourth page frame metadata, each of the R pieces of fourth page frame metadata includes a first field to indicate a size of a corresponding physical block, and each of the R pieces of fourth page frame metadata includes a second field to indicate that each piece of fourth page frame metadata is valid page frame metadata; and selecting the Q second physical pages from the P second physical pages, and allocating the Q second physical pages to the first process includes: selecting a second physical block from the R physical blocks, and allocating the second physical block to the first process, where the first physical block includes the Q second physical pages.

With reference to the first aspect, in some implementations of the first aspect, the R pieces of fourth page frame metadata are obtained based on R pieces of second page frame metadata in the P pieces of second page frame metadata, and the method further includes: changing a value of a second field of each of P-R pieces of second page frame metadata, to indicate that the P-R pieces of second page frame metadata are invalid page frame metadata. 10. The method according to claim 8 or 9, where each of the N pieces of first page frame metadata includes a fourth field to indicate whether the first physical pages corresponding to the N pieces of first page frame metadata are divided; and after converting the M first physical pages into the P second physical pages, the method further includes: changing a value of a fourth field of each piece of page frame metadata of M pieces of first page frame metadata corresponding to the M first physical pages, to indicate that the M first physical pages have been divided.

With reference to the first aspect, in some implementations of the first aspect, the P pieces of second page frame metadata are stored on any one of the P second physical pages.

With reference to the first aspect, in some implementations of the first aspect, when choosing to allocate the O first physical pages to the first process at the first granularity, the method further includes: when detecting that the first preset condition is met, reclaiming the O first physical pages.

With reference to the first aspect, in some implementations of the first aspect, each of the N pieces of first page frame metadata includes a third field to indicate that the N pieces of first page frame metadata are created by a primary page frame manager.

According to a second aspect, a memory manager method is provided. The method is applied to a computer device, the computer device includes a primary page frame manager, a first secondary page frame manager, and a page allocator, the primary page frame manager is configured to manage a first physical page of a first granularity, and the first secondary page frame manager is configured to manage a second physical page of a second granularity. The primary page frame manager is configured to: divide a physical memory into N first physical pages based on the first granularity, and create N pieces of first page frame metadata corresponding to the N first physical pages, where the first granularity is greater than a minimum granularity supported by the computer device, N≥1 and is an integer, and each of the N pieces of first page frame metadata includes a first field to indicate a size of a corresponding first physical page; the page allocator is configured to determine, based on a request of a first process, a size of a physical memory required by the first process; and the page allocator is further configured to: choose, based on the size of the physical memory required by the first process, to allocate O first physical pages to the first process at the first granularity, or choose to allocate Q second physical pages to the first process at the second granularity, or choose to allocate W first physical pages to the first process at the first granularity and allocate T second physical pages to the first process at the second granularity, where the second granularity is less than the first granularity, the second granularity is greater than or equal to the minimum granularity supported by the computer device, N≥O≥1, O is an integer, Q≥1, Q is an integer, N≥W≥1, W is an integer, T≥1, and T is an integer.

In this embodiment of this application, the page frame metadata is first created for the physical memory based on a huge page granularity, and then whether to further refine the physical page is determined based on the size of the physical memory required by the first process, so that management overheads of the page frame metadata can be reduced, and a physical page that meets a granularity of the first process can be quickly allocated.

With reference to the second aspect, in some implementations of the second aspect, when the page allocator chooses to allocate the Q second physical pages to the first process at the second granularity, the first secondary page frame manager is configured to: select M first physical pages from the N first physical pages, where N≥M≥1, and M is an integer; and convert the M first physical pages into P second physical pages based on the second granularity, and create P pieces of corresponding second page frame metadata, where P>M≥1, P is an integer, and each of the P pieces of second page frame metadata includes a first field to indicate a size of a corresponding second physical page; and the page allocator is specifically configured to: select the Q second physical pages from the P second physical pages, and allocate the Q second physical pages to the first process.

With reference to the second aspect, in some implementations of the second aspect, each of the N pieces of first page frame metadata includes a second field to indicate that the N pieces of first page frame metadata are valid page frame metadata; and after converting the M first physical pages into the P second physical pages based on the second granularity, the primary page frame manager is further configured to change a value of a second field of each of M pieces of first page frame metadata corresponding to the M first physical pages, to indicate that the M first physical pages are invalid page frame metadata.

With reference to the second aspect, in some implementations of the second aspect, when the page allocator chooses to allocate the Q second physical pages to the first process at the second granularity, the page allocator is further configured to: when detecting that a first preset condition is met, determine the first secondary page frame manager; the first secondary page frame manager is further configured to: reclaim the Q second physical pages; and re-convert the P second physical pages into the M first physical pages, and release the P pieces of second page frame metadata; and the primary page frame manager is further configured to change the value of the second field of each of the M pieces of first page frame metadata corresponding to the M first physical pages, to indicate that the M first physical pages are valid page frame metadata.

With reference to the second aspect, in some implementations of the second aspect, when the page allocator chooses to allocate the W first physical pages to the first process at the first granularity and allocate the T second physical pages to the first process at the second granularity, the page allocator is specifically configured to: select the W first physical pages from the N first physical pages, and allocate the W first physical pages to the first process, where N≥W≥1, and W is an integer; the first secondary page frame manager is configured to: select S first physical pages from N-W first physical pages, where N-W≥S≥1, and S is an integer; and convert the S first physical pages into D second physical pages based on the second granularity, and create D pieces of corresponding second page frame metadata, where D>S>1, D is an integer, and each of the D pieces of second page frame metadata includes a first field to indicate a size of a corresponding second physical page; and the page allocator is specifically configured to: select the T second physical pages from the D second physical pages, and allocate the T second physical pages to the first process.

With reference to the second aspect, in some implementations of the second aspect, each of the N pieces of first page frame metadata includes the second field to indicate that the N pieces of first page frame metadata are the valid page frame metadata; and before the page allocator chooses to allocate the O first physical pages to the first process at the first granularity, the primary page frame manager is further configured to convert the N first physical pages into L physical blocks by using a buddy algorithm, where the L physical blocks correspond to L pieces of third page frame metadata, each of the L pieces of third page frame metadata includes a first field to indicate a size of a corresponding physical block, and each of the L pieces of third page frame metadata includes a second field to indicate that each piece of third page frame metadata is valid page frame metadata; and the page allocator is specifically configured to: select a first physical block from the L physical blocks, and allocate the first physical block to the first process, where the first physical block includes the O first physical pages.

With reference to the second aspect, in some implementations of the second aspect, the primary page frame manager is further configured to change a value of a second field of each of N-L pieces of first page frame metadata, to indicate that the N-L pieces of first page frame metadata are invalid page frame metadata.

With reference to the second aspect, in some implementations of the second aspect, each of the P pieces of second page frame metadata includes a second field to indicate that the P pieces of second page frame metadata are valid page frame metadata; and before the page allocator selects the Q second physical pages from the P second physical pages, and allocates the Q second physical pages to the first process, the first primary page frame manager is further configured to convert the P second physical pages into R physical blocks by using a buddy algorithm, where the R physical blocks correspond to R pieces of fourth page frame metadata, each of the R pieces of fourth page frame metadata includes a first field to indicate a size of a corresponding physical block, and each of the R pieces of fourth page frame metadata includes a second field to indicate that each piece of fourth page frame metadata is valid page frame metadata; and the primary page frame manager is specifically configured to: select a second physical block from the R physical blocks, and allocate the second physical block to the first process, where the first physical block includes the Q second physical pages.

With reference to the second aspect, in some implementations of the second aspect, the first secondary page frame manager is further configured to change a value of a second field of each of P-R pieces of second page frame metadata, to indicate that the P-R pieces of second page frame metadata are invalid page frame metadata.

With reference to the second aspect, in some implementations of the second aspect, each of the N pieces of first page frame metadata includes a fourth field to indicate whether the first physical pages corresponding to the N pieces of first page frame metadata are divided; and after the first secondary page frame manager converts the M first physical pages into the P second physical pages, the primary page frame manager is further configured to change a value of a fourth field of each piece of page frame metadata of M pieces of first page frame metadata corresponding to the M first physical pages, to indicate that the M first physical pages have been divided.

With reference to the second aspect, in some implementations of the second aspect, the P pieces of second page frame metadata are stored on any one of the P second physical pages.

With reference to the second aspect, in some implementations of the second aspect, when the page allocator chooses to allocate the O first physical pages to the first process at the first granularity, the page allocator is further configured to: when detecting that the first preset condition is met, select the primary page frame manager; and the primary page frame manager is further configured to reclaim the O first physical pages.

With reference to the second aspect, in some implementations of the second aspect, each of the N pieces of first page frame metadata includes a third field to indicate that the N pieces of first page frame metadata are created by the primary page frame manager.

According to a third aspect, a memory management apparatus is provided. The apparatus includes: a storage module, configured to store a program; and a processing module, configured to execute the program stored in the storage module. When the program stored in the storage module is executed, the processing module is configured to perform the method according to the foregoing aspects.

According to a fourth aspect, a computer-readable storage medium is provided. The computer-readable medium stores program code to be executed by a device, and the program code is used to perform the method according to the foregoing aspects.

According to a fifth aspect, a computer program product including instructions is provided. When the computer program product is run on a computer, the computer is enabled to perform the method according to the foregoing aspects.

According to a sixth aspect, a chip is provided. The chip includes a processing module and a communication interface, and the processing module reads, through the communication interface, instructions stored in a storage, and is configured to perform the method according to the foregoing aspects.

Optionally, in an implementation, the chip may further include a storage module. The storage module stores instructions, and the processing module is configured to execute the instructions stored in the storage module. When the instructions are executed, the processing module is configured to perform the method according to the foregoing aspects.

According to a seventh aspect, a chip is provided. The chip includes a processing core configured to perform the method according to the first aspect and a memory management unit configured to perform the method according to the second aspect.

According to an eighth aspect, a computer device is provided. The computer device includes the chip according to the seventh aspect.

According to a ninth aspect, a computer device is provided. The computer device includes one or more processors and one or more storages. The one or more storages store one or more computer programs, the one or more computer programs include instructions, and when the instructions are executed by the one or more processors, a computer is enabled to perform the method according to the foregoing aspect.

**BRIEF DESCRIPTION OF DRAWINGS**

FIG. 1 is a diagram of a hardware structure of a computer device (or a computer system) to which a memory management method according to an embodiment of this application is applicable;
FIG. 2 is a diagram of converting page frame metadata of a basic page into page frame metadata of a composite page;
FIG. 3 is a diagram of a system architecture according to an embodiment of this application;
FIG. 4A and FIG. 4B are a schematic flowchart of a memory management method according to an embodiment of this application;
FIG. 5 is a diagram of converting a first physical page into a second physical page according to an embodiment of this application;
FIG. 6 is a schematic flowchart of a method for determining a physical address based on page frame metadata according to an embodiment of this application;
FIG. 7 is a diagram of determining a physical address based on page frame metadata according to an embodiment of this application;
FIG. 8 is a schematic flowchart of a method for determining page frame metadata based on a physical address according to an embodiment of this application;
FIG. 9A and FIG. 9B are a schematic flowchart of a memory management method according to an embodiment of this application;
FIG. 10 is a schematic flowchart of a memory management method according to an embodiment of this application;
FIG. 11 is a diagram of a structure of a chip system according to an embodiment of this application; and
FIG. 12 is a conceptual partial view of a computer program product according to an embodiment of this application.

**DESCRIPTION OF EMBODIMENTS**

The following describes embodiments of this application with reference to the accompanying drawings. It is clear that the described embodiments are merely some rather than all of embodiments of this application. A person of ordinary skill in the art may learn that, with development of technologies and emergence of new scenarios, the technical solutions provided in embodiments of this application are also applicable to similar technical problems.

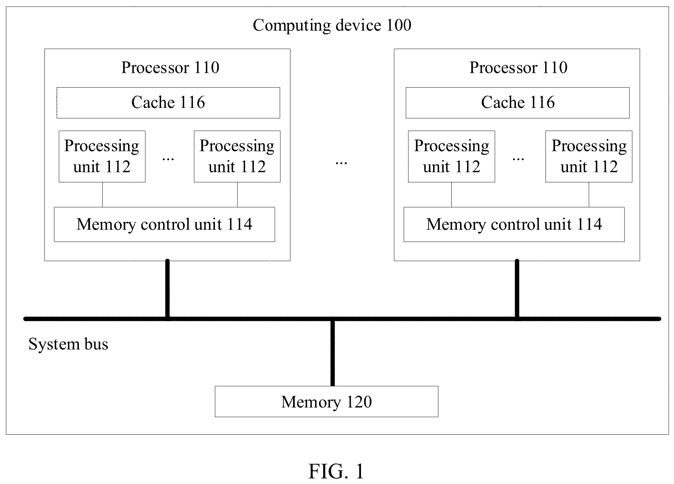

A memory access method provided in embodiments of this application is applied to a computer system. The computer system may be a server, a terminal device, a virtual machine (virtual machine, VM), or a container (container). For an architecture of the computer system, refer to FIG. 1 for understanding. FIG. 1 is a diagram of an architecture of a computer system.

A computing device may also be referred to as a computer system. From a perspective of logical layering, the computing device may include a hardware layer, an operating system layer that runs above the hardware layer, and an application layer that runs above the operating system layer. The hardware layer includes hardware such as a processing unit, a memory, and a memory control unit. A function and a structure of the hardware are subsequently described in detail. The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, in embodiments of this application, the computer system may be a handheld device such as a smartphone, or may be a terminal device such as a personal computer. This is not particularly limited in this application, provided that program code of a method for recording a memory management behavior in embodiments of this application can be read and the program code can be run. The memory management method in embodiments of this application may be performed by a computer device, or may be performed by a functional module that can invoke a program and execute the program in the computer system.

In this application, the program or the program code is a group of ordered instructions (or code) used to implement a relatively independent function. The process is a process in which a program and data of the program are run on the computer device. The program is usually designed through modularization, to be specific, a function of the program is detailed and decomposed into a plurality of smaller functional modules. The program includes at least one function, and the function is a code segment for implementing one functional module. Therefore, the function is a basic unit of function modularization of the program, and may also be considered as a subprogram.

FIG. 1 is a diagram of an architecture of a computing device 100 according to an embodiment of this application. The computing device 100 may include at least one processor 110 and a memory 120.

Optionally, the computer device 110 may further include a system bus, and the processor 110 and the memory 120 each are connected to the system bus. The processor 110 can access the memory 120 through the system bus. For example, the processor 110 can read and write data or execute code in the memory 120 through the system bus.

A function of the processor 110 is mainly to interpret instructions (or code) of a computer program and process data in computer software. The instructions of the computer program and the data in the computer software may be stored in the memory 120 or a cache unit 116.

In embodiments of this application, the processor 110 may be an integrated circuit chip, and has a signal processing capability. By way of an example but not a limitation, the processor 110 may be a general-purpose processor, a system on chip (System On Chip, SOC), an application-specific integrated circuit (application-specific integrated circuit, ASIC), a field programmable gate array (field programmable gate array, FPGA) or another programmable logic device, a discrete gate or a transistor logic device, a discrete hardware component, or any combination of the foregoing components. The general-purpose processor may be a microprocessor or the like. Each processor 110 includes a memory control unit 114 and at least one processing unit 112. The processing unit 112 may also be referred to as a core (core), a core, a processing core, or a central processing unit (central processing unit, CPU), and is a most important component of the processor. The processing unit 112 may be made from monocrystalline silicon by using a specific production process, and all computing, acceptance commands, storage commands, and data processing of the processor are executed by the core. The processing unit may independently run a program instruction, and accelerate a running speed of a program by using a parallel computing capability. Various processing units have a fixed logical structure. For example, the processing unit includes logical units such as an execution unit, an instruction-level unit, and a bus interface.

The memory control unit 114 is configured to control data exchange between the memory 120 and the processing unit 112. Specifically, the memory control unit 114 may receive a memory access request from the processing unit 112, and control access to the memory based on the memory access request. By way of an example but not a limitation, in embodiments of this application, the memory control unit may be a component such as a memory management unit (memory management unit, MMU).

In embodiments of this application, each memory control unit 114 can address the memory 120 through the system bus. In addition, an arbiter (which is not shown in the figure) may be configured in the system bus, and the arbiter may be responsible for processing and coordinating contention access of a plurality of processing units 112.

In embodiments of this application, the processing unit 112 may be communicatively connected to the memory control unit 114 through a connection line such as an address line inside a chip, to implement communication between the processing unit 112 and the memory control unit 114.

Optionally, each processor 110 may further include the cache unit 116, and a cache is a data exchange buffer (referred to as a cache). When the processing unit 112 needs to read data, the processing unit 112 first searches the cache for required data. If the data is found, the processing unit 112 directly reads the data; or if the data is not found, the processing unit 112 searches the memory for the data. Because the cache runs much faster than the memory, a function of the cache is to help the processing unit 112 run faster.

The memory (memory) 120 may provide a running space for a process in the computing device 100. For example, the memory 120 may store a computer program (specifically, code of the program) for generating the process. In addition, the memory 120 may store data generated during running of the process, for example, intermediate data or process data. The memory may also be referred to as an internal memory, and is configured to temporarily store operation data in the processor 110 and data exchanged with an external memory such as a hard disk. Provided that the computer runs, the processor 110 invokes data that needs to be operated to the memory for an operation, and the processing unit 112 sends a result after the operation is completed.

By way of an example but not a limitation, in embodiments of this application, the memory 120 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory 120 of the system and method described in this specification includes but is not limited to these and any storage of another proper type.

It should be understood that a structure of the foregoing computing device 100 is merely an example for description, and this application is not limited thereto. The computing device 100 in embodiments of this application may include various types of hardware in the computer system in the conventional technology. For example, the computing device 110 may further include a storage other than the memory 120, for example, a magnetic disk storage.

For ease of understanding of embodiments of this application, some basic concepts in this application are briefly described.

1. A virtual address is a specific address that can be identified or generated by an operating system in an address space, and a size range of the virtual address may be determined by a quantity of bits of the operating system running in the processor. For example, if the operating system running in the processor is 32 bits, and the virtual address is also 32 bits, a virtual address range of the virtual address is 0 to 0xFFFFFFFF (4GB); or if the operating system running in the processor is 64 bits, and the virtual address is also 64 bits, the address space of the virtual address is 0 to 0xFFFFFFFFFFFFFFFF (16EB).

The virtual address may be divided into a plurality of virtual address spaces based on an actual requirement, for example, a user mode address space and a kernel mode address space. The user mode address space may be accessed by a user mode program (for example, reading, writing, opening, closing, or drawing) and a kernel mode program (for example, process management, storage management, file management, or device management). The kernel mode address space may be accessed only by the kernel mode program during running. Each process in the operating system corresponds to a virtual address space.

2. A physical address may be a specific address in an address space actually owned by a hardware storage device such as an internal memory.

3. A virtual page may also be referred to as a page (page). The MMU may use a paging mechanism to manage the virtual address space on a per-virtual-page basis, and each page may include a virtual address space of a preset size. The virtual address space may include more than one virtual address, and one virtual address space may correspond to one page table set. The page table set may be used to determine a physical address corresponding to a virtual address in the virtual address space.

Correspondingly, the MMU may determine, by using the page table set, the physical address corresponding to the virtual address.

4. Physical page: In a Linux kernel, the MMU is mainly used to map the "virtual address" to an actual "physical address". Specifically, the MMU uses a physical page (page) as a basic unit of memory management, and a size of the physical page has a direct relationship with hardware capability support and an architecture. Currently, all architectures support physical pages with a granularity of 4 KB, and a part of architectures also support physical pages with a granularity of 16 KB or 64 KB.

Physical page division is usually required. A 4 KB page is usually referred to as a basic page, and a page greater than 4 KB is usually referred to as a "huge page" or a "composite page". For example, a 2-megabyte (megabyte, MB) page and a 1-gigabyte (GigaByte, GB) page are both referred to as huge pages. Certainly, a huge page may also have another specification, but the specification of the huge page is usually an integer multiple of 4 KB. The basic page may be understood as a minimum granularity supported by the computer device.

5. A page table (page table) is a special data structure stored in a memory. The page table may be used as an index of the virtual address space and may include a plurality of page table entries. Each page table entry includes an association relationship between a page table entry index address and a physical address. The physical address may be carried in a page table descriptor of the page table entry. The page table descriptor may indicate a base address of a next-level page table or a base address of a physical address corresponding to the virtual address.

6. Page table translation: When a processing core in the processor runs a process, the processing core needs to access the memory. Usually, the processing core sends a virtual address of the process to the memory management unit (memory management unit, MMU), so that the MMU translates the virtual address of the process into a physical address of the memory based on a page table corresponding to the process. This process is referred to as page table translation (or referred to as address translation, address conversion, or the like).

7. Page table entry (Page Table Entry, PTE): A page table consists of a plurality of page table entries, that is, each row in the page table is one page table entry. For example, in a 64-bit system, a size of the page table entry is 8 bytes (bytes, B). Information recorded in the page table entry includes:

a page frame number: where the page frame number is for recording a specific physical page corresponding to a virtual page;

a valid bit (V): where the valid bit identifies whether the virtual page corresponding to the page table entry is read into the memory; otherwise, the virtual page is read into a magnetic disk;

an access bit: where the access bit is a reference bit, identifying whether the virtual page has been accessed;

a modified bit: where the modified bit indicating whether the virtual page has been modified in the memory; and if the virtual page has been modified, the virtual page is to be persisted to the magnetic disk in the future, and this is the purpose of this flag bit; and

a protection bit: where the protection bit identifies read and write permissions of the virtual page.

In addition, to facilitate understanding of embodiments of this application, the following descriptions are provided.

First, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean execution sequences. The execution sequences of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "S310" are merely identifiers for ease of description, and are not intended to limit a sequence of performing steps.

Second, in embodiments of this application, terms such as "example" or "for example" represents giving an example, an illustration, or a description. Any embodiment or design scheme described as an "example" or "for example" in this application should not be explained as being more preferred or having more advantages than another embodiment or design scheme. To be precise, use of the term such as "example" or "for example" is intended to present a relative concept in a specific manner.

Third, "being stored" in embodiments of this application may be being stored in one or more storages. The one or more storages may be separately disposed, or may be integrated in an encoder, a decoder, a processor, or a communication apparatus. Alternatively, a part of the one or more storages may be separately disposed, and a part of the one or more memories may be integrated in the decoder, the processor, or the communication apparatus. A type of the storage may be a storage medium in any form. This is not limited in this application.

Fourth, "include" (also referred to as "includes", "including", "comprises", and/or "comprising") in embodiments of this application, when being used in this specification, specifies presence of stated features, integers, steps, operations, elements, and/or components, with presence or addition of one or more other features, integers, steps, operations, elements, components, and/or their components not excluded.

Fifth, "if" in embodiments of this application may be explained as "when..." ("when" or "upon"), "in response to determining", or "in response to detecting". Similarly, according to the context, a phrase "if determining..." or "if detecting (a stated condition or event)" may be interpreted as a meaning of "when determining...", "in response to determining...", "when detecting (a stated condition or event)", or "in response to detecting (a stated condition or event)".

Sixth, the terms used in the descriptions of the various examples in embodiments of this application are merely intended to describe specific examples, but are not intended to constitute a limitation. The terms "one" ("a" and "an") and "the" of singular forms used in the descriptions of the various examples and the appended claims are also intended to include plural forms, unless otherwise specified in the context clearly.

Seventh, the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between associated objects.

With reference to FIG. 1, the foregoing briefly describes a scenario to which the memory access method provided in this application is applicable, and describes basic concepts in this application. Before using a physical memory, the computer device needs to determine that a page frame corresponding to the physical memory has been established. When the operating system is started, page frame metadata may be created for the physical memory by using a basic page as a granularity. The page frame metadata may also be referred to as a page frame structure, that is, each piece of page frame metadata is stored by using a struct page structure, and the physical memory is managed by using the page frame metadata in a running process of the operating system. When a computer performs memory management in this method, management overheads that are in direct proportion to a total physical memory size are generated. For example, if a size of a basic page is 4 KB and a size of page frame metadata is 64 bytes, memory management overheads of the computer are about 64/(4*1024)=1.5%. In a huge page scenario, memory management overheads are determined by a basic page. For example, if a size of the basic page is 4 KB, a size of the huge page is 2 MB, a size of the page frame metadata is 64 bytes, and the huge page includes 512 basic pages, and correspondingly includes 512 pieces of page frame metadata, after combination, 511 pieces of page frame metadata are wasted, and a waste rate reaches 99.8%.

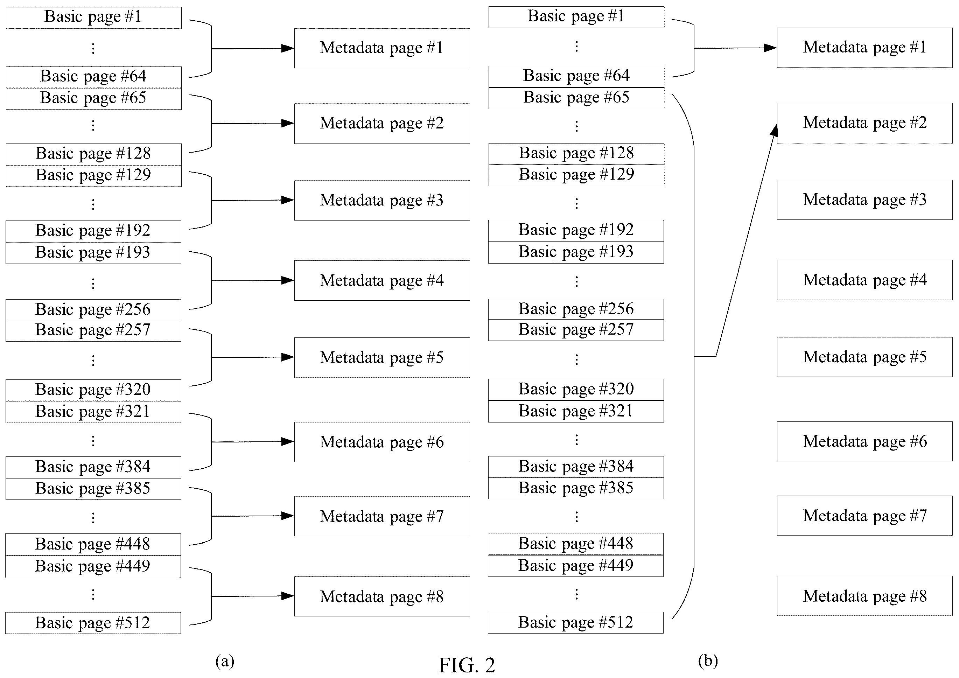

To resolve the foregoing problem, currently, a method for converting page frame metadata of a basic page into page frame metadata of a composite page is proposed. For example, 512 basic pages are converted into one composite page. As shown in (a) in FIG. 2, the composite page includes 512 basic pages, and the 512 basic pages correspond to 512 pieces of page frame metadata. Assuming that a size of the page frame metadata is 64B, before the page frame metadata is combined, the page frame metadata of the 512 basic pages may be stored in eight metadata pages, namely, a metadata page #1 to a metadata page #8 in the figure. When the metadata pages are combined, page frame metadata of a 1st basic page may be used as page frame metadata of a first page of the composite page. The page frame metadata of the first page is used as core metadata to store page frame data information of the composite page. Page frame metadata of a last page (namely, a basic page other than the 1st basic page) is changed to be used to store only a pointer pointing to the first page.

Because all the page frame metadata of the last page is the pointer pointing to the first page, the page frame metadata of the last page may be mapped to a same physical page. As shown in (b) in FIG. 2, when the page frame metadata of the last page is changed, because page frame metadata of a 2nd basic page to a 64th basic page and the page frame metadata of the 1st basic page (namely, the first page) are mapped to a same metadata page #1, the page frame metadata of the 2nd basic page to the 64th basic page cannot be combined.

With reference to the foregoing descriptions, it may be learned that the foregoing technical solution has the following disadvantages: (1) There is still a waste of memory overheads of a part of the page frame metadata of the last page. (2) Because the page frame metadata of the composite page does not store information about the page frame metadata of the basic page, the composite page cannot support mapping based on a granularity of the basic page in a use process, and ecological compatibility is poor.

In view of this, embodiments of this application provide a memory management method, so that fast allocation of a physical page that meets a task granularity cannot be implemented, memory overheads are low, and ecological compatibility is good. This is applicable to a scenario in which a huge page and a small page are mixed.

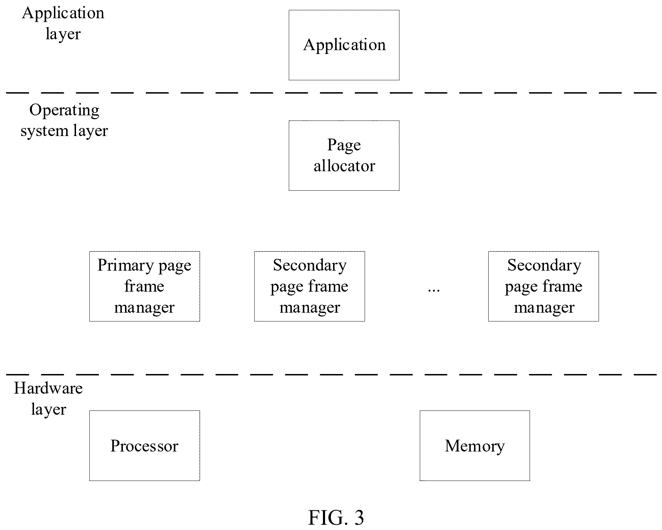

FIG. 3 is a diagram of a system architecture according to an embodiment of this application.

As shown in FIG. 3, the system architecture may be divided into a hardware module and a software module. The hardware module includes a processor and a memory, and the software module includes a memory management module and an application. The memory management module includes a page allocator, a primary page frame manager (primary page manager, PPM), and at least one secondary page frame manager (secondary page manager, SPM).

The primary page frame manager is configured to manage a physical memory at a huge page granularity, and complete creation of page frame metadata at the huge page granularity of the physical memory when an operating system is started. The page frame metadata created by the primary page frame manager may be referred to as primary page frame manager metadata or first page frame metadata.

It may be understood that the huge page granularity is greater than a minimum granularity supported by the system. For example, the minimum granularity supported by the system is 4 KB, and the huge page granularity is 16 KB, 64 KB, 1 MB, 2 MB, or the like.

The secondary page frame manager is configured to manage a physical memory whose granularity is less than the huge page granularity. The secondary page frame manager may communicate with the primary page frame manager, to convert a huge page into a physical page of a granularity corresponding to the secondary page frame manager, and create page frame metadata. In other words, in this embodiment of this application, the page frame metadata of the physical page whose granularity is less than the huge page granularity is dynamically created. The secondary page frame manager is further configured to convert an idle page back into the huge page, and release the corresponding page frame metadata. The page frame metadata created by the secondary page frame manager may be referred to as secondary page frame manager metadata or second page frame metadata.

The system architecture provided in this embodiment of this application may include one or more secondary page frame managers, and the one or more secondary page frame managers may correspond to different granularities. For example, the system architecture includes two secondary page frame managers: a secondary page frame manager #1 and a secondary page frame manager #2. A granularity corresponding to the secondary page frame manager #1 is 16 KB, and a granularity corresponding to the secondary page frame manager #2 is 4 KB.

Optionally, in some embodiments, when the system architecture includes only one secondary page frame manager, a granularity corresponding to the secondary page frame manager may be the minimum granularity supported by the system architecture.

Optionally, in some embodiments, when the system architecture includes a plurality of secondary page frame managers, a granularity corresponding to at least one secondary page frame manager included in the plurality of secondary page frame managers is the minimum granularity supported by the system architecture. For example, the minimum granularity supported by the system architecture is 4 KB, and the system architecture includes three secondary page frame managers: a secondary page frame manager #1, a secondary page frame manager #2, and a secondary page frame manager #3. A granularity corresponding to the secondary page frame manager #1 is 16 KB, a granularity corresponding to the secondary page frame manager #2 is 8 KB, and a granularity corresponding to the secondary page frame manager #3 is 4 KB; or a granularity corresponding to the secondary page frame manager #1 may be 16 KB, and a granularity corresponding to the secondary page frame manager #2 and a granularity corresponding to the secondary page frame manager #3 are 4 KB; or granularities corresponding to the secondary page frame manager #1, the secondary page frame manager #2, and the secondary page frame manager #3 are all 4 KB.

Optionally, in some embodiments, when the system includes a plurality of secondary page frame managers, all the plurality of secondary page frame managers may communicate with the primary page frame manager to convert huge pages into physical pages of granularities corresponding to the secondary page frame managers.

The page allocator (page allocator) is configured to select different page frame managers, to implement allocation and reclaiming of physical memories of different granularities.

It may be learned from the foregoing descriptions that this embodiment of this application provides a plurality of page frame managers to manage physical pages of different granularities. To adapt to physical pages of different granularities and page frame managers, the page frame metadata is improved in this embodiment of this application.

Optionally, in some embodiments, the page frame metadata includes a first field, the first field may be named as an order field, and the first field indicates a size of a physical page corresponding to the page frame metadata.

For example, a size of the first field is 8 bits, and the size of the physical page corresponding to the page frame metadata may be determined by using a formula (1):

$$A=2^B \times C \quad\quad\quad (1)$$

A is the size of the physical page corresponding to the page frame metadata, B is a value of a second field, and C is a minimum granularity of a physical page supported by a computer device.

For example, if a value of the first field is "00000100", and the minimum granularity of the physical page supported by the computer is 4K, the size of the physical page corresponding to the page frame metadata is $2^4 \times 4K = 64K$.

It should be noted that the foregoing formula (1) is merely an example. In some other embodiments of this application, the value of the first field may be substituted into another formula to compute the size of the physical page corresponding to the page frame metadata.

Optionally, in some embodiments, the page frame metadata includes the second field, the second field may be named as a valid field, and the second field indicates whether the page frame metadata is valid page frame metadata, that is, whether the page frame metadata corresponds to a physical page. Specifically, the second field may indicate whether the page frame metadata is the valid page frame metadata when the physical page is managed by using a buddy (buddy) algorithm. For specific descriptions, refer to the following descriptions. Details are not described herein.

For example, a size of the second field is 1 bit. When the second field is "0", the page frame metadata is invalid page frame metadata, that is, there is no corresponding physical page. When the second field is "1", the page frame metadata is valid page frame metadata, that is, there is the corresponding physical page.

Optionally, in some embodiments, the page frame metadata includes a third field, the third field may be named as a secondary field, and the third field indicates whether the page frame metadata is page frame metadata created by the secondary page frame management layer.

For example, a size of the third field is 1 bit. When the third field is "0", the page frame metadata is the page frame metadata created by the primary page frame manager. When the third field is "1", the page frame metadata is the page frame metadata created by the secondary page frame manager.

It may be understood that, in a process of reclaiming, allocating, or the like the physical page, values of the first field, the second field, and/or the third field of the page frame metadata corresponding to the physical pages may be changed. For specific descriptions, refer to the following descriptions.

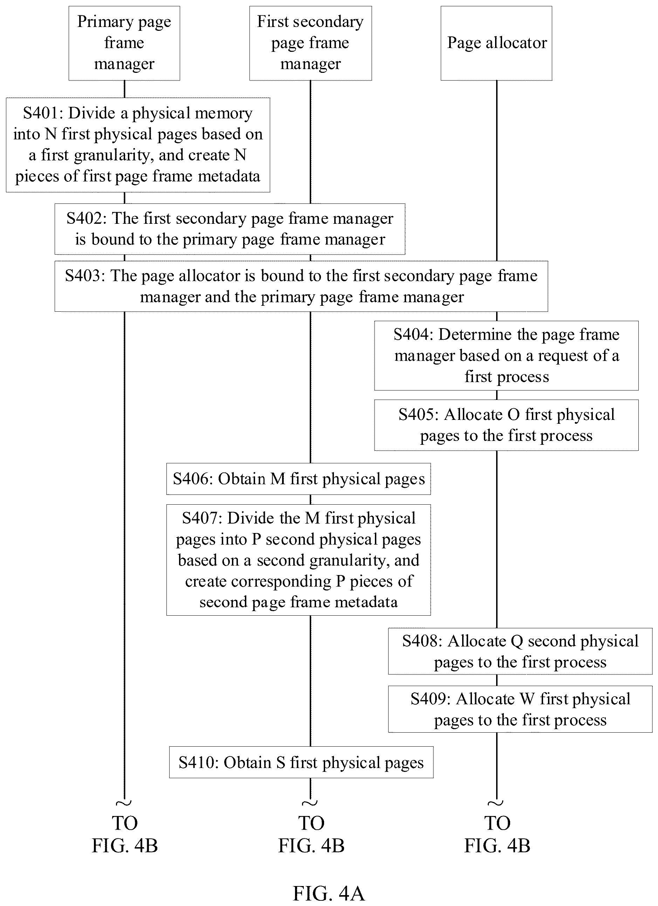

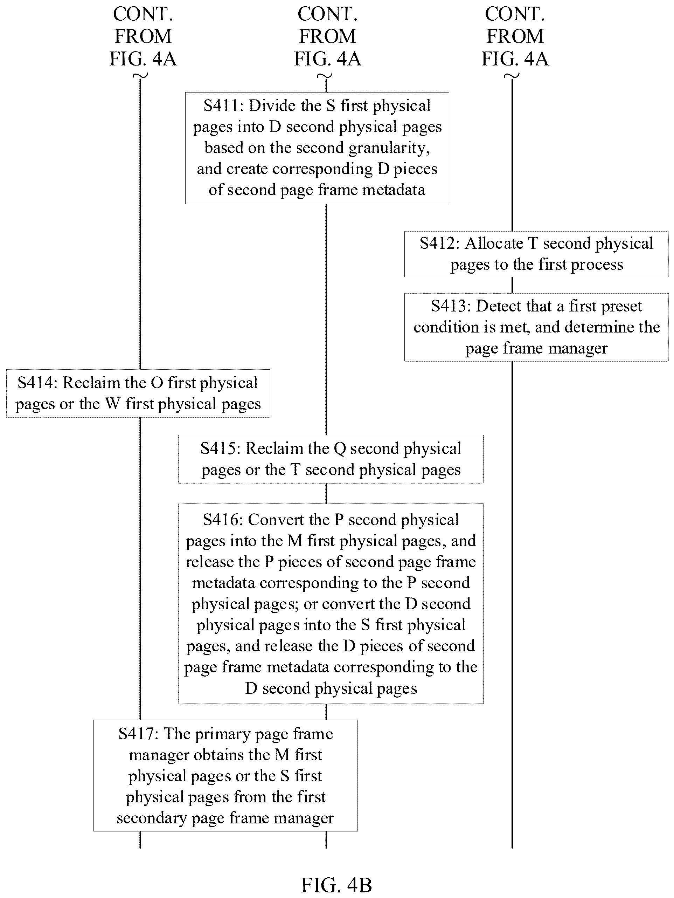

FIG. 4A and FIG. 4B are a schematic flowchart of a memory management method according to an embodiment of this application. The method is applied to a computer device. The computer device includes a primary page frame manager, a first secondary page frame manager, and a page allocator. The primary page frame manager corresponds to a first granularity, and the first secondary page frame manager corresponds to a second granularity. As shown in FIG. 4A and FIG. 4B, the method includes the following steps.

S401: The primary page frame manager divides a physical memory into N first physical pages based on the first granularity, and creates N pieces of first page frame metadata.

Specifically, when an operating system is started, a running instance of the primary page frame manager is created and initialized, so that the primary page frame manager can scan the physical memory in the computer device, divide the physical memory into the N first physical pages based on the first granularity, and create the N pieces of first page frame metadata. The N pieces of first page frame metadata are in one-to-one correspondence with the N first physical pages, and N≥1 and is an integer.

Optionally, each of the N pieces of first page frame metadata includes a first field, and the first field indicates a size of a physical page corresponding to each piece of first page frame metadata.

For example, if a value of the first field of each piece of first page frame metadata is "00000100", the size of the physical page corresponding to each piece of first page frame metadata is 64 KB.

Optionally, each of the N pieces of first page frame metadata includes a second field, and the second field indicates validity of each piece of first page frame metadata.

For example, if a value of the second field of each piece of first page frame metadata is "1", it may indicate that each piece of first page frame metadata is valid metadata.

Optionally, each of the N pieces of first page frame metadata includes a third field, and the third field indicates whether the first page frame metadata is created by the primary page frame manager.

For example, if a value of the third field of each piece of first page frame metadata is "0", it may indicate that each piece of first page frame metadata is page frame metadata created by the primary page frame manager.

S402: The first secondary page frame manager is bound to the primary page frame manager.

Specifically, when the operating system is started, a running instance of the first secondary page frame manager is created and initialized, so that the first secondary page frame manager is bound to the primary page frame manager, and the first secondary page frame manager may communicate with the primary page frame manager to obtain a huge page from the primary page frame manager.

S403: The page allocator is bound to the first secondary page frame manager and the primary page frame manager.

Specifically, when the operating system is started, the page allocator may be created and initialized, and the primary page frame manager and the first secondary page frame manager are registered with the page allocator. That is, the page allocator is bound to the first secondary page frame manager and the primary page frame manager. After the page allocator is bound to the first secondary page frame manager and the primary page frame manager, the page allocator may dynamically allocate the physical memory through the first secondary page frame manager and the primary page frame manager.

S404: The page allocator determines the page frame manager based on a request of a first process.

Specifically, the page allocator may determine, based on the request of the first process, a size of a physical memory required by the first process, to determine the page frame manager based on the size of the physical memory required by the first process.

Optionally, in some embodiments, when the size of the physical memory required by the first process is greater than or equal to the first granularity, the page allocator selects the primary page frame manager. When the page allocator selects the primary page frame manager, the page allocator performs S405.

Optionally, in some embodiments, when the size of the physical memory required by the first process is less than the first granularity, the page allocator selects the first secondary page frame manager. When the page allocator selects the first secondary page frame manager, the first secondary page frame manager is triggered to perform S406 and S407.

Optionally, in some embodiments, when the size of the physical memory required by the first process is greater than or equal to the first granularity, the page allocator may select both the primary page frame manager and the first secondary page frame manager. In this case, the page allocator performs S409, and the first secondary page frame manager performs S410 and S411.

S405: The page allocator allocates O first physical pages to the first process.

Specifically, after selecting the primary page frame manager, the page allocator may determine the N first physical pages through the primary page frame manager, and granularities of the N first physical pages are the first granularity, so that the page allocator can allocate the O first physical pages to the first process based on the N first physical pages, where 1≤O≤N, and O is an integer.

For example, if the first granularity is 64 KB, and the size of the physical memory required by the first process is 128 KB, the page allocator may allocate, to the first process, two physical pages whose granularities are 64 KB.

For another example, if the first granularity is 64 KB, and the size of the physical memory required by the first process is 145 KB, the page allocator may allocate, to the first process, three physical pages whose granularities are 64 KB.

Optionally, when allocating the O first physical pages to the first process, the page allocator needs to perform division for O times, and each time allocates one first physical page.

It should be noted that the O first physical pages allocated by the page allocator to the first process may be consecutive physical pages, or may be inconsecutive physical pages. When the primary page frame manager manages the first physical page by using a buddy algorithm, the page allocator allocates consecutive physical pages. For specific descriptions, refer to the following descriptions. Details are not described herein.

S406: The first secondary page frame manager obtains M first physical pages.

Specifically, because the page allocator selects the first secondary page frame manager, but the first secondary page frame manager does not manage a physical page, the first secondary page frame manager may obtain the M first physical pages by communicating with the primary page frame manager, where N≥M≥1, and M is an integer.

The first secondary page frame manager may determine, in the following several manners, a quantity of first physical pages that need to be obtained, that is, determine a size of M.

In a possible implementation, the first secondary page frame manager may determine, based on the second granularity and a size of the page frame metadata, the quantity of first physical pages that need to be obtained.

For example, the first secondary page frame manager determines, according to the formula (2), the quantity of first physical pages that need to be obtained:

$$M = \frac{\dfrac{E}{F} * E}{G} \qquad (2)$$

E is the second granularity, F is the size of the page frame metadata, and G is the first granularity. For example, if the second granularity is 4 KB, the size of the page frame metadata is 64B, and the first granularity is 64 KB, M=4 may be obtained according to the formula (2), to be specific, the first secondary page frame manager obtains four first physical pages, and the four first physical pages are consecutive.

In a possible implementation, the quantity of first physical pages obtained by the first secondary page frame manager is a fixed value.

Because the first secondary page frame manager obtains the first physical page when it is determined that the size of the physical memory required by the first process is less than the first granularity, a requirement of the first process can be met by obtaining any quantity of first physical pages by the first secondary page frame manager. Therefore, in this implementation, the quantity of first physical pages obtained by the first secondary page frame manager may be a fixed value, for example, m=2.

S407: The first secondary page frame manager divides the M first physical pages into P second physical pages based on the second granularity, and creates corresponding P pieces of second page frame metadata.

Specifically, after obtaining the M first physical pages, the first secondary page frame manager may convert the M first physical pages into the P second physical pages, and create the corresponding P pieces of second page frame metadata, where $P>M\geq1$, P is an integer, and granularities of the P second physical pages are the second granularity.

Optionally, each of the P pieces of second page frame metadata includes a first field, and the first field indicates a size of a physical page corresponding to each piece of second page frame metadata.

For example, if a value of the first field of each piece of second page frame metadata is "00000000", the size of the physical page corresponding to each piece of second page frame metadata is 4 KB.

Optionally, each of the P pieces of second page frame metadata includes a second field, and the second field indicates validity of each piece of second page frame metadata.

For example, if a value of the second field of each piece of second page frame metadata is "1", it may indicate that each piece of second page frame metadata is valid page frame metadata.

Optionally, each of the P pieces of second page frame metadata includes a third field, and the third field indicates whether the second page frame metadata is created by the primary page frame manager.

For example, if a value of the third field of each piece of second page frame metadata is "1", it may indicate that each piece of second page frame metadata is page frame metadata created by the secondary page frame manager.

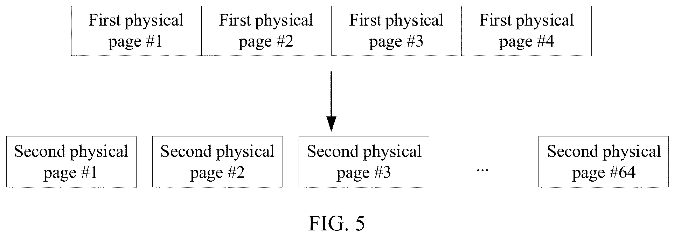

FIG. 5 is a diagram of converting the first physical page into the second physical page.

As shown in FIG. 5, the first secondary page frame manager obtains four first physical pages, and a granularity of the first physical page is 64 KB; and the first secondary page frame manager may convert each first physical page into 16 second physical pages, and a granularity of the second physical page is 4 KB. That is, the first secondary page frame manager may convert the four first physical pages into 64 second physical pages.

When the M first physical pages are converted into the P second physical pages, page frame metadata needs to be created for each second physical page, that is, the P pieces of second page frame metadata are created.

Optionally, in some embodiments, the P pieces of second page frame metadata may be stored on any one of the P second physical pages.

For example, the first secondary page frame manager obtains four first physical pages, and a granularity of the first physical page is 64 KB; and the first secondary page frame manager may convert the four first physical pages into 64 second physical pages, where a granularity of the second physical page is 4 KB; and create 64 pieces of corresponding second page frame metadata for the 64 second physical pages. The 64 pieces of second page frame metadata may be stored on any page of the 64 second physical pages (for example, a 1st page of the 64 second physical pages).

Optionally, in some embodiments, the first secondary page frame manager may manage states of the P second physical pages by using a bitmap (bitmap), that is, determine, by using the bitmap, whether the P second physical pages are used. For example, when the P second physical pages are not allocated, values corresponding to the P second physical pages in the bitmap are "0"; or when the P second physical pages are all allocated, values corresponding to the P second physical pages in the bitmap are "1".

It should be noted that, when the page frame manager does not manage the physical page by using the buddy algorithm, after the first secondary page frame manager divides the M first physical pages into the P second physical pages based on the second granularity, and creates the corresponding P pieces of second page frame metadata, the primary page frame manager may change a value of a second field of each of M pieces of first page frame metadata corresponding to the M first physical pages, to indicate that the M pieces of first page frame metadata are invalid metadata.

When the page frame manager manages the physical page by using the buddy algorithm, one fourth field may be newly added to page frame metadata of each first physical page, and the fourth field indicates whether the physical page is divided. After the first secondary page frame manager divides the M first physical pages into the P second physical pages based on the second granularity, and creates the corresponding P pieces of second page frame metadata, the primary page frame manager may change a value of a fourth field of each of the M pieces of first page frame metadata corresponding to the M first physical pages, to indicate that the M first physical pages have been divided.

For description of the buddy algorithm, refer to the following descriptions. Details are not described herein.

S408: The page allocator allocates Q second physical pages to the first process.

Specifically, after the first secondary page frame manager converts the M first physical pages into the P second physical pages, the page allocator may allocate the Q second physical pages to the first process based on the size of the physical memory required by the first process, where $P \geq Q \geq 1$, and Q is an integer.

For example, if the granularity of the second physical page is 4 KB, and the size of the physical memory required by the first process is 3 KB, the page allocator may allocate one physical page to the first process, that is, Q=1.

For another example, if the granularity of the second physical page is 4 KB, and the size of the physical memory required by the first process is 7 KB, the page allocator may allocate two physical pages to the first process, that is, Q=2.

For another example, if the granularity of the second physical page is 4 KB, and the size of the physical memory required by the first process is 18 KB, the page allocator may allocate five physical pages to the first process, that is, Q=5.

Optionally, when allocating the Q second physical pages to the first process, the page allocator needs to perform division for Q times, and each time allocates one second physical page.

Similarly, the Q second physical pages allocated by the page allocator to the first process may be consecutive physical pages, or may be inconsecutive physical pages. It may be understood that after the page allocator allocates the Q second physical pages to the first process, the first secondary page frame manager changes values (for example, set from "0" to "1") in the bitmap of the Q second physical pages, to indicate that the Q second physical pages are allocated.

S409: The page allocator allocates W first physical pages to the first process.

Specifically, the page allocator may select both the primary page frame manager and the first secondary page frame manager, and allocate the W first physical pages to the first process based on the size of the physical memory required by the first process, where $1 \leq W \leq N$, and W is an integer. In this case, physical memories of the W first physical pages are less than the physical memory required by the first process, and physical memories of W+1 first physical pages are greater than the physical memory required by the first process.

For example, if the first granularity is 64 KB, and the size of the physical memory required by the first process is 132 KB, the page allocator may first allocate two first physical pages to the first process.

For another example, if the first granularity is 64 KB, and the size of the physical memory required by the first process is 128 KB, the page allocator may first allocate one first physical page to the first process, and remaining 64 KB may be allocated at the second granularity.

S410: The first secondary page frame manager obtains S first physical pages.

S411: The first secondary page frame manager divides the S first physical pages into D second physical pages based on the second granularity, and creates corresponding D pieces of second page frame metadata.

It should be understood that for descriptions of S410 and S411, refer to the descriptions of S406 and S407. For brevity, details are not described herein again.

S412: The page allocator allocates T second physical pages to the first process.

Specifically, in some embodiments, the page allocator has allocated the W first physical pages to the first process in S409. Although sizes of the physical memories of the W first physical pages are less than that of the physical memory required by the first process, the sizes of the physical memories are close to that of the physical memory required by the first process. If another first physical page is allocated to the first process, a waste of a physical memory may be caused. Therefore, the page allocator may allocate the T second physical pages to the first process to reduce physical memory overheads.

For example, the first granularity is 64 KB, and the size of the physical memory required by the first process is 132 KB; and if the page allocator may allocate three first physical pages to the first process, a waste of a 60 KB physical memory is caused. Therefore, the page allocator may allocate two first physical pages and one second physical page to the first process.

In some other embodiments, the page allocator has allocated the W first physical pages to the first process in S409, and the W first physical pages are all idle first physical pages. However, there may be a part of idle second physical pages in the system. Therefore, the page allocator may allocate the T second physical pages to the first process to meet the requirement of the first process. It may be understood that, in this embodiment, S410 and S411 may not be performed. To be specific, before the page allocator allocates the W first physical pages to the first process, the first secondary page frame manager has converted a part of first physical pages into second physical pages.

In this embodiment of this application, the page frame metadata is first created for the physical memory based on a huge page granularity, and then whether to further refine the physical page is determined based on the size of the physical memory required by the first process, so that management overheads of the page frame metadata can be reduced, and a physical page that meets a granularity of the first process can be quickly allocated.

In the foregoing technical solution, there is a 1:1 linear mapping relationship between the page frame metadata and a physical address. The linear mapping relationship may be established when the operating system is started, so that an offset in the physical memory can be determined by using an offset of the page frame metadata in all current page frame metadata, to determine the physical address corresponding to the page frame metadata. After a physical address corresponding to each piece of page frame metadata is determined, a page table may be established.

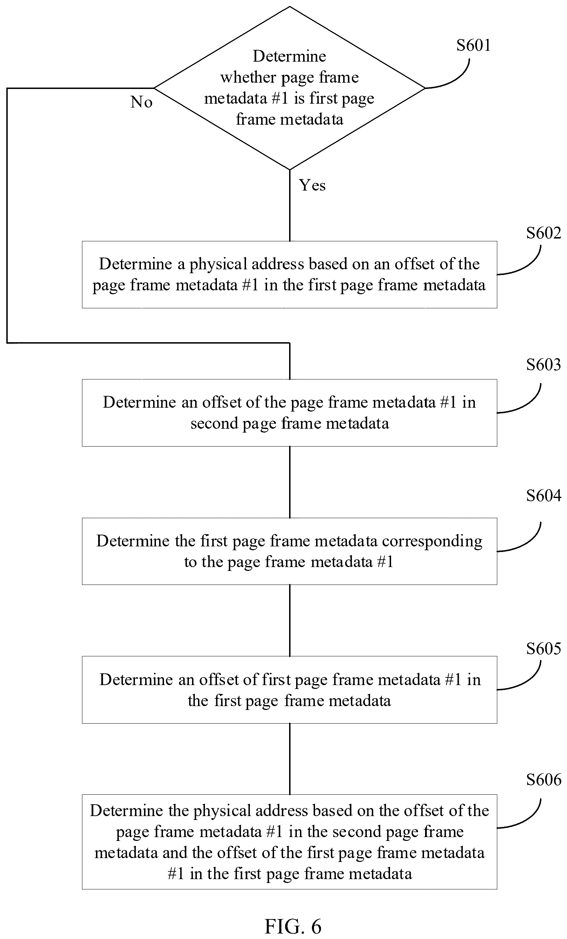

FIG. 6 is a schematic flowchart of a method for determining a physical address based on page frame metadata according to an embodiment of this application.

S601: Determine whether page frame metadata #1 is first page frame metadata.

The page frame metadata #1 includes a third field. It may be determined, by using the third field, that the page frame metadata #1 is created by the primary page frame manager or the secondary page frame manager. When it is determined that the page frame metadata #1 is created by the primary page frame manager, S602 is performed. When it is determined that the page frame metadata #1 is created by the secondary page frame manager, S603 is performed.

S602: Determine a physical address based on an offset of the page frame metadata #1 in the first page frame metadata.

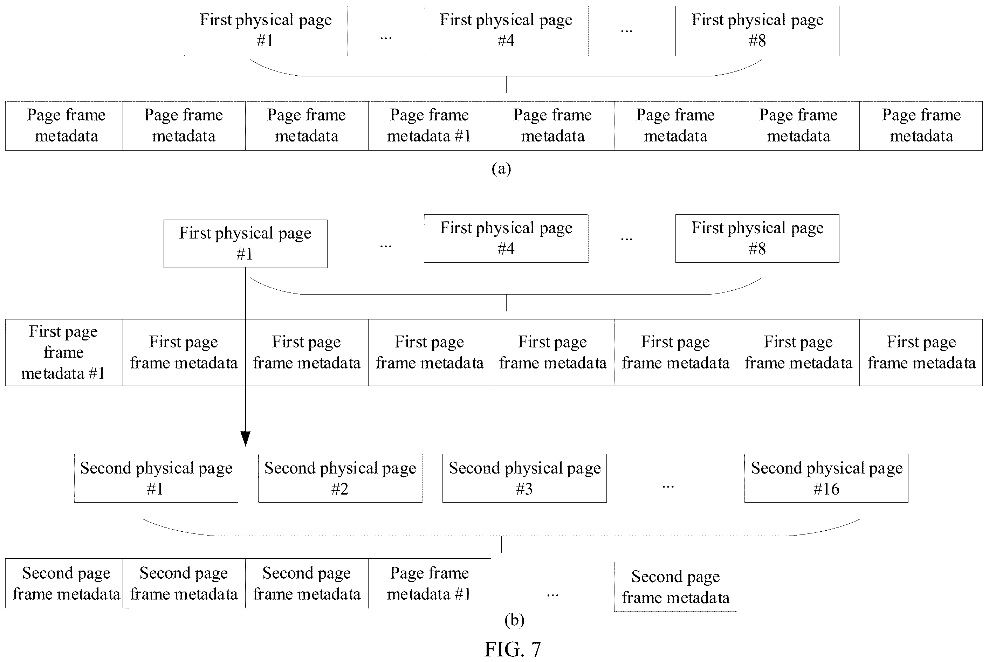

For example, as shown in (a) in FIG. 7, if the primary page frame manager manages eight first physical pages, where the eight first physical pages correspond to eight pieces of first page frame metadata, and an offset of the page frame metadata #1 in all first page frame metadata is 4, the physical address corresponding to the page frame metadata #1 may be determined based on a specified linear mapping relationship.

S603: Determine an offset of the page frame metadata #1 in second page frame metadata.

For example, as shown in (b) in FIG. 7, assuming that the page frame metadata #1 is created by a secondary page frame manager #1, the secondary page frame manager creates 16 pieces of second page frame metadata, where an offset of the page frame metadata #1 in the 16 pieces of second page frame metadata is 4, namely, the offset of the page frame metadata #1 in the second page frame metadata.

S604: Determine the first page frame metadata corresponding to the page frame metadata #1.

For example, as shown in (b) in FIG. 7, the secondary page frame manager obtains a first physical page #1 managed by the primary page frame manager, and converts the first physical page #1 into 16 second physical pages, where first page frame metadata corresponding to the first physical page #1 is first page frame metadata #1, that is, determines the first page frame metadata #1 in S604.

S605: Determine an offset of the first page frame metadata #1 in the first page frame metadata.

For example, as shown in (b) in FIG. 7, the primary page frame manager manages eight first physical pages, where the eight first physical pages correspond to eight pieces of first page frame metadata, and an offset of the first page frame metadata #1 in all first page frame metadata is 1, that is, determines the offset of the first page frame metadata #1 in the first page frame metadata.

S606: Determine the physical address based on the offset of the page frame metadata #1 in the second page frame metadata and the offset of the first page frame metadata #1 in the first page frame metadata.

After the offset of the page frame metadata #1 in the second page frame metadata and the offset of the first page frame metadata #1 in the first page frame metadata are determined, a large physical address may be first determined based on the offset of the first page frame metadata #1 in the first page frame metadata, and then the physical address corresponding to the page frame metadata is further determined based on the offset of the page frame metadata #1 in the second page frame metadata.

It should be noted that, in this embodiment of this application, a sequence of performing S603 and S604 is not limited. S603 and S604 may be simultaneously performed, or S603 may be performed before S604, or S604 may be performed before S603.

Optionally, in some embodiments, the primary page frame manager may manage the N first physical pages by using a buddy (buddy) algorithm, to divide the N first physical pages into L physical blocks.

Specifically, the primary page frame manager may group the N first physical pages into a plurality of linked lists. The N first physical pages grouped into 11 linked lists are used as an example. Each linked list includes consecutive first physical pages whose sizes are 1, 2, 4, 8, 16, 32, 64, 128, 256, 512, and 1024. The first granularity being 64 KB is used as an example. Corresponding sizes are 64 KB, 128 KB, 256 KB, 512 KB, 1 MB, 2 MB, 4 MB, 8 MB, 16 MB, 32 MB, and 64 MB. That is, the primary page frame manager divides the N first physical pages into the L physical blocks by using the buddy algorithm, and the L physical blocks include physical blocks of different sizes, so that the page allocator can select an appropriate block based on the size of the physical memory required by the first process, and allocate the block to the first process, where $N \geq L \geq 1$, and L is an integer. The physical block may be understood as a physical memory including a plurality of consecutive physical pages. In other words, when the first process needs a consecutive physical memory, the primary page frame manager may manage a first physical page by using a buddy algorithm, to convert the first physical page into a physical block, and allocate the physical block to the first process.

For example, the first process requests four first physical pages, and the page allocator may allocate, to the first process, a physical block whose size is four first physical pages.

For another example, the first process requests five first physical pages, and the page allocator may allocate, to the first process, a physical block whose size is eight first physical pages.

For another example, the first process requests five first physical pages. If all blocks whose sizes are eight first physical pages have been used, the page allocator may divide a physical block whose size is 16 first physical pages into two physical blocks whose sizes are eight first physical pages; and then allocate one of the physical blocks to the first process, and insert the other physical block into a linked list whose size is eight first physical pages.

It should be noted that when the primary page frame manager divides the N first physical pages into the L physical blocks, to allocate the L physical blocks, the L physical blocks need to correspond to L pieces of page frame metadata. In this embodiment of this application, the page frame metadata corresponding to the physical blocks managed by the primary page frame manager is referred to as third page frame metadata, and the L pieces of third page frame metadata may be generated in the following several manners.

In a possible implementation, the primary page frame manager creates the L pieces of third page frame metadata.

When converting the N first physical pages into the L physical blocks, the primary page frame manager may create the corresponding L pieces of third page frame metadata.

Optionally, each of the L pieces of third page frame metadata includes a first field, to indicate a size of a physical block corresponding to each piece of third page frame metadata.

Optionally, each of the L pieces of third page frame metadata includes a second field, to indicate that each piece of third page frame metadata is valid page frame metadata.

Optionally, each of the L pieces of third page frame metadata includes a third field, to indicate that each piece of third page frame metadata is created by the primary page frame manager.

It may be understood that, in this implementation, the primary page frame manager may change values of second fields of original N pieces of first page frame metadata (for example, change from "0" to "1"), to indicate that the N pieces of first page frame metadata are invalid page frame metadata.

In a possible implementation, the primary page frame manager obtains the L pieces of third page frame metadata based on L pieces of first page frame metadata.

Because the primary page frame manager divides the N first physical pages into the L physical blocks, N≥L. To reduce a quantity of pieces of page frame metadata, the page frame metadata may not be newly added, but the L pieces of first page frame metadata in the original N pieces of first page frame metadata are reused. When reusing the L pieces of first page frame metadata, the primary page frame manager may change values of first fields of the L pieces of first page frame metadata, to indicate sizes of physical blocks corresponding to the L pieces of first page frame metadata (namely, the L pieces of third page frame metadata). In addition, the primary page frame manager may further change values of second fields of N-L pieces of first page frame metadata that are not reused (for example, change from "1" to "0"), to indicate that the N-L pieces of first page frame metadata are invalid metadata.

For example, if the primary page frame manager divides a first physical page #1 and a first physical page #2 into one physical block, the first physical page #1 corresponds to first page frame metadata #1, the first physical page #2 corresponds to first page frame metadata #2, and a granularity of the first physical page #1 and a granularity of the first physical page #2 are 8 KB, values of first fields of the first page frame metadata #1 and the first page frame metadata #2 may be "00000010", and values of second fields of the first page frame metadata #1 and the first page frame metadata #2 may be "1". After the first physical page #1 and the first physical page #2 are divided into the physical block, the value of the first field of the first page frame metadata #1 may be changed to "00000100", and the value of the second field of the first page frame metadata #2 may be changed to "0".

Optionally, in some embodiments, the first secondary page frame manager may manage P first physical pages by using a buddy (buddy) algorithm, to divide the P second physical pages into R physical blocks.

Specifically, the first secondary page frame manager may group the P second physical pages into a plurality of linked lists. The P second physical pages grouped into 11 linked lists are used as an example. Each linked list includes consecutive first physical pages whose sizes are 1, 2, 4, 8, 16, 32, 64, 128, 256, 512, and 1024. The second granularity being 4 KB is used as an example. Corresponding sizes are 4 KB, 8 KB, 16 KB, 32 KB, 64 KB, 128 KB, 256 KB, 512 KB, 1 MB, 2 MB, and 4 MB. That is, the first secondary page frame manager divides the P second physical pages into the R physical blocks by using the buddy algorithm, and the R physical blocks include physical blocks of different sizes, so that the page allocator can select an appropriate block based on the size of the physical memory required by the first process, and allocate the block to the first process, where P≥R≥1, and R is an integer. The physical block may be understood as a physical memory including a plurality of consecutive physical pages.

For example, the first process requests four second physical pages, and the page allocator may allocate, to the first process, a physical block whose size is four second physical pages.

For another example, the first process requests five second physical pages, and the page allocator may allocate, to the first process, a physical block whose size is eight second physical pages.

For another example, the first process requests five second physical pages. If all blocks whose sizes are eight second physical pages have been used, the page allocator may divide a physical block whose size is 16 second physical pages into two physical blocks whose sizes are eight second physical pages; and then allocate one of the physical blocks to the first process, and insert the other physical block into a linked list whose size is eight second physical pages.

It should be noted that when the first secondary page frame manager divides the P second physical pages into the R physical blocks, to allocate the R physical blocks, the R physical blocks need to correspond to R pieces of page frame metadata. In this embodiment of this application, the page frame metadata corresponding to the physical block managed by the secondary page frame manager is referred to as fourth page frame metadata. A manner of generating the R pieces of fourth page frame metadata is similar to a manner of generating the L pieces of third page frame metadata. For brevity, details are not described herein again.

Optionally, in some embodiments, the method 400 further includes the following step.

S413: The page allocator detects that a first preset condition is met, and determines the page frame manager.

Specifically, the page allocator detects that the first preset condition is met, that is, the page allocator determines that physical memory reclaiming needs to be performed. The page allocator may perform, based on a page frame manager to which the physical page belongs, S414 when determining that the physical page belongs to the primary page frame manager, or S415 when determining that the physical page belongs to the first secondary page frame manager. In this embodiment, the page allocator allocates the O first physical pages to the first process, or allocates the Q second physical pages to the first process, or allocates the W first physical pages and the T second physical pages to the first process. Therefore, during physical page reclaiming, if the page allocator allocates the O first physical pages or the W first physical pages to the first process, the O first physical pages or the W first physical pages may be reclaimed, that is, S414 is performed; or if the page allocator allocates the Q second physical pages or the T second physical pages to the first process, the Q second physical pages or the T second physical pages may be reclaimed, that is, S415 is performed.

In this embodiment of this application, the first preset condition for performing physical memory reclaiming by the page allocator is not limited. For example, the first preset condition may be that a second process initiates a physical memory reclaiming request. That is, when detecting that the second process initiates the physical memory reclaiming request, the page allocator may perform physical memory reclaiming.

For example, the first preset condition may be that the page allocator detects that the physical memory is insufficient when allocating the physical memory. For example, the page allocator allocates a physical page to a third process based on a request of the third process; but detects that an idle physical memory is insufficient, and may perform physical memory reclaiming.

For example, the first preset condition may be that physical memory utilization exceeds a threshold. For example, if the page allocator detects that the physical memory utilization exceeds 90%, the page allocator may perform physical memory reclaiming.

The page allocator may determine, by using a third field of the page frame metadata, the page frame manager to which the physical page corresponding to the page frame metadata belongs. For example, if the third field of the page frame metadata is "0", the physical page corresponding to the page frame metadata belongs to the primary page frame manager; or if the third field of the page frame metadata is "1", the physical page corresponding to the page frame metadata belongs to the first secondary page frame manager.

It may be learned from the foregoing descriptions that the page frame metadata needs to be used when the page frame manager to which the physical page belongs is determined. Therefore, the page allocator needs to determine the corresponding page frame metadata by using the physical address of the physical page.

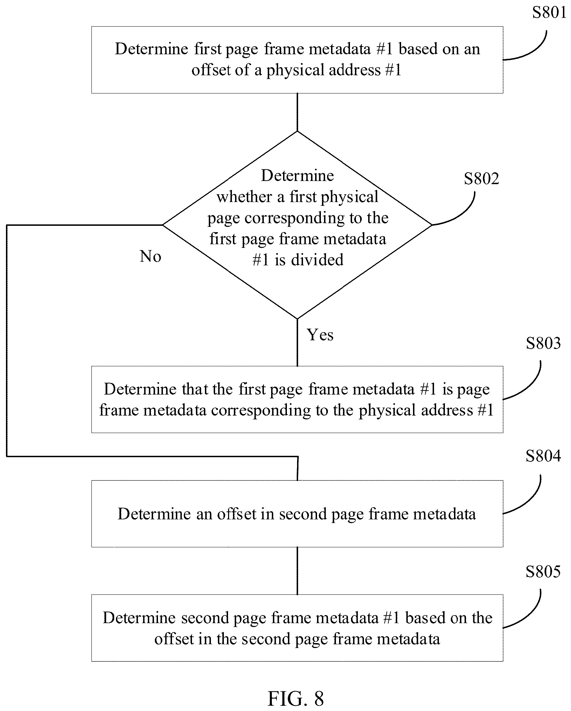

FIG. 8 is a schematic flowchart of a method for determining page frame metadata based on a physical address according to an embodiment of this application. As shown in FIG. 8, the method includes the following steps.

S801: Determine first page frame metadata #1 based on an offset of a physical address #1.

Specifically, it may be learned from the foregoing descriptions that there is a 1:1 linear mapping relationship between the page frame metadata and the physical address. Therefore, the page allocator may determine, based on the offset of the physical address #1, an offset of the first page frame metadata corresponding to the physical address #1 in all first page frame metadata, so that the first page frame metadata #1 can be determined.

S802: Determine whether a first physical page corresponding to the first page frame metadata #1 is divided.

Whether the first physical page corresponding to the first page frame metadata #1 is divided may be determined in the following several possible implementations:

In a possible implementation, when a buddy algorithm is not used, the page allocator may determine, based on a second field of the first page frame metadata #1, whether the first page frame metadata #1 is valid page frame metadata. If the first page frame metadata #1 is valid page frame metadata, S803 is performed; or if the first page frame metadata #1 is not valid page frame metadata, S804 is performed. If the first page frame metadata #1 is not valid page frame metadata, it indicates that a physical page corresponding to the first page frame metadata #1 has been divided into a plurality of physical pages of a second granularity by the first secondary page frame manager. If the first page frame metadata #1 is valid page frame metadata, it indicates that the first page frame metadata #1 is the page frame metadata corresponding to the physical address #1.

In a possible implementation, after the buddy algorithm is used, because when a plurality of physical pages are combined into one physical block, a second field of a physical page other than a 1st physical page in the plurality of physical pages is changed, whether the first physical page corresponding to the first page frame metadata #1 is divided cannot be determined by using the second field. Therefore, when managing the physical page by using the buddy algorithm, the page frame manager may newly add a fourth field for page frame metadata of each first physical page, and the fourth field indicates whether the physical page is divided (for example, when the physical page is not divided, the fourth field of the page frame metadata of the physical page is "0"; and after the physical page is divided, the fourth field of the page frame metadata of the physical page is "1"). The page allocator may determine, by using the fourth field of the first page frame metadata #1, whether the first physical page corresponding to the first page frame metadata #1 is divided. S803: Determine that the first page frame metadata #1 is the page frame metadata corresponding to the physical address #1.

If the first page frame metadata #1 is valid page frame metadata, that is, the physical page corresponding to the first page frame metadata #1 is not divided, it indicates that the first page frame metadata #1 is the page frame metadata corresponding to the physical address #1, that is, the physical page corresponding to the physical address #1 is managed by the primary page frame manager.

S804: Determine an offset in second page frame metadata.

Specifically, after the page allocator determines that the first page frame metadata #1 is invalid page frame metadata, that is, the physical page corresponding to the first page frame metadata is divided, a physical address #2 may be determined based on the first page frame metadata #1. For specific descriptions, refer to S602. For brevity, details are not described herein again. It may be understood that the physical address #2 includes the physical address #1, the page allocator may determine an offset of the physical address #1 in the physical address #2, and the offset is the offset in the second page frame metadata.

S805: Determine second page frame metadata #1 based on the offset in the second page frame metadata.

Specifically, after determining the offset of the physical address #1 in the physical address #2, the page allocator determines the second page frame metadata #1 based on an offset in all second page frame metadata, and the second page frame metadata #1 is the page frame metadata corresponding to the physical address #1.

According to the foregoing method, the page frame metadata corresponding to the physical page may be determined, so that the corresponding page frame manager can be determined.

S414: The primary page frame manager reclaims the O first physical pages or the W first physical pages.

Specifically, the page allocator determines, by using the page frame metadata, that the O first physical pages or the W first physical pages belong to the primary page frame manager, and the primary page frame manager may reclaim the O first physical pages or the W first physical pages.

Optionally, the primary page frame manager may include a first idle page pool, and the primary page frame manager may put the O first physical pages or the W first physical pages that are reclaimed into the first idle page pool for a next time of allocation.

S415: The first secondary page frame manager reclaims the Q second physical pages or the T second physical pages.

Specifically, the page allocator determines, by using the page frame metadata, that the Q second physical pages or the T second physical pages belong to the first secondary page frame manager, and the first secondary page frame manager may reclaim the Q second physical pages or the T second physical pages.

Optionally, the first secondary page frame manager may include a second idle page pool, and the first secondary page frame manager may put the Q second physical pages or the T second physical pages that are reclaimed into the second idle page pool for a next time of allocation.

It may be understood that in this embodiment, after the first secondary page frame manager reclaims the Q second physical pages or the T second physical pages, a quantity of idle second physical pages managed by the first secondary page frame manager is P or D.

S416: The first secondary page frame manager converts the P second physical pages into the M first physical pages, and releases the P pieces of second page frame metadata corresponding to the P second physical pages; or converts the D second physical pages into the S first physical pages, and releases the D pieces of second page frame metadata corresponding to the D second physical pages.

Specifically, if determining, based on the bitmap, that the P second physical pages or the D second physical pages are all idle, the first secondary page frame manager may convert the P second physical pages back to the M first physical pages; or convert the D second physical pages into the S first physical pages, and release the P pieces of second page frame metadata corresponding to the P second physical pages; or release the D pieces of second page frame metadata corresponding to the D second physical pages.

S417: The primary page frame manager obtains the M first physical pages or the S first physical pages from the first secondary page frame manager.

Specifically, after the first secondary page frame manager converts the P second physical pages back to the M first physical pages, the primary page frame manager may communicate with the first secondary page frame manager to obtain the M first physical pages; or after the first secondary page frame manager converts the D second physical pages into the S first physical pages, the primary page frame manager may communicate with the first secondary page frame manager to obtain the S first physical pages.

Optionally, the primary page frame manager may include the first idle page pool, and the primary page frame manager may put the M first physical pages or the S first physical pages that are obtained into the first idle page pool for a next time of allocation.

In some embodiments, when the page frame manager does not use the buddy algorithm, after the primary page frame manager obtains the M first physical pages or the S first physical pages from the first secondary page frame manager, the primary page frame manager may change second fields of M pieces of first page frame metadata corresponding to the M first physical pages, or change second fields of S pieces of first page frame metadata corresponding to the S first physical pages, to indicate that the M pieces of first page frame metadata or the S pieces of first page frame metadata are valid page frame metadata, that is, the M first physical pages or the S first physical pages are not divided.

In some other embodiments, after the page frame manager uses the buddy algorithm, after the primary page frame manager obtains the M first physical pages or the S first physical pages from the first secondary page frame manager, the primary page frame manager may change fourth fields of M pieces of first page frame metadata corresponding to the M first physical pages, or change fourth fields of S pieces of first page frame metadata corresponding to the S first physical pages, to indicate that the M pieces of first page frame metadata or the S pieces of first page frame metadata are valid page frame metadata, that is, the M first physical pages or the S first physical pages are not divided. In the foregoing embodiment, an example in which there is one secondary page frame manager is used. However, this embodiment of this application is not limited thereto. In some other embodiments of this application, there may be two or more secondary page frame managers. The following describes the memory management method provided in this embodiment of this application by using an example in which there are two secondary page frame managers.

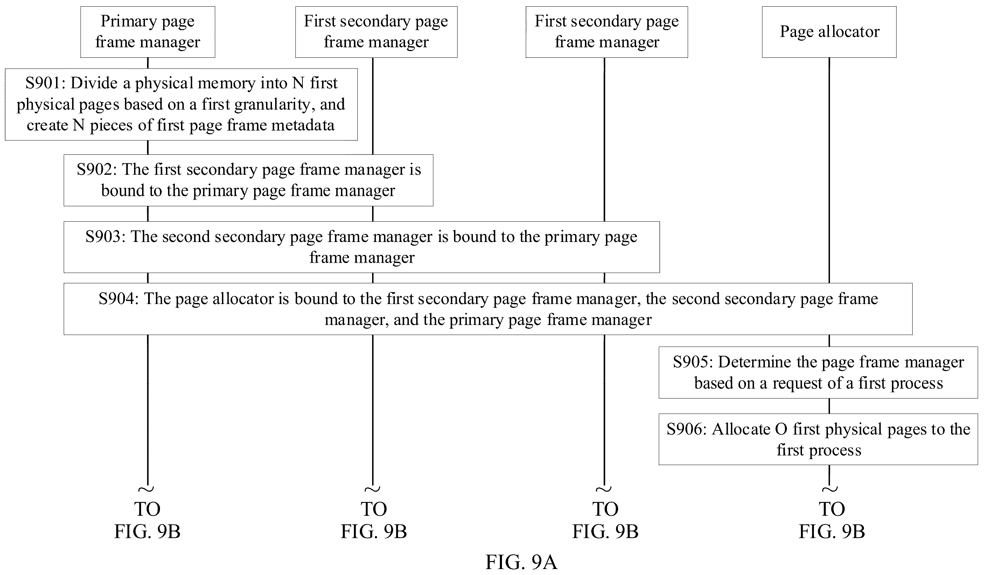

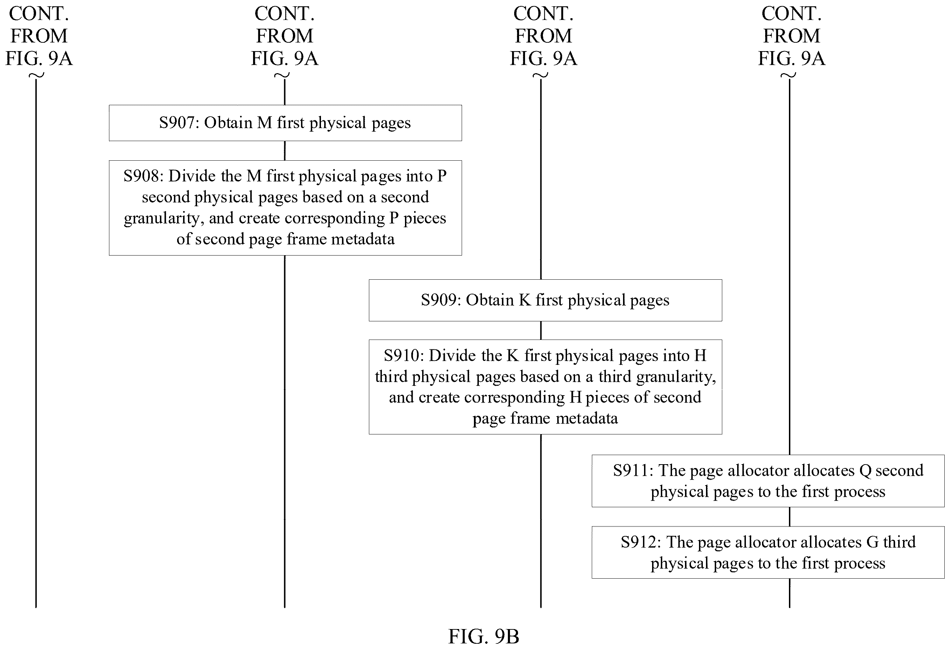

FIG. 9A and FIG. 9B are a schematic flowchart of a memory management method according to an embodiment of this application. The method is applied to a computer device. The computer device includes a primary page frame manager, a first secondary page frame manager, a second secondary page frame manager, and a page allocator. The primary page frame manager corresponds to a first granularity, the first secondary page frame manager corresponds to a second granularity, and the second secondary page frame manager corresponds to a third granularity, where the third granularity is a minimum granularity supported by the computer device. As shown in FIG. 9A and FIG. 9B, the method includes the following steps.

S901: The primary page frame manager divides a physical memory into N first physical pages based on the first granularity, and creates N pieces of first page frame metadata.

S902: The first secondary page frame manager is bound to the primary page frame manager.

S903: The second secondary page frame manager is bound to the primary page frame manager.

S904: The page allocator is bound to the first secondary page frame manager, the second secondary page frame manager, and the primary page frame manager.

It should be understood that for descriptions of S901 to S904, refer to the foregoing descriptions. For brevity, details are not described herein again.

S905: The page allocator determines the page frame manager based on a request of a first process.

Specifically, the page allocator may determine, based on the request of the first process, a size of a physical memory required by the first process, to determine the page frame manager based on the size of the physical memory required by the first process.

Optionally, in some embodiments, when the size of the physical memory required by the first process is greater than or equal to the first granularity, the page allocator selects the primary page frame manager. When the page allocator selects the primary page frame manager, the page allocator performs S906.

Optionally, in some embodiments, when the size of the physical memory required by the first process is less than the first granularity and is greater than or equal to the second granularity, the page allocator selects the first secondary page frame manager. When the page allocator selects the first secondary page frame manager, the first secondary page frame manager is triggered to perform S907 and S908, and then the page allocator performs S911.

Optionally, in some embodiments, when the size of the physical memory required by the first process is less than the second granularity, the page allocator selects the second secondary page frame manager. When the page allocator selects the second secondary page frame manager, the first secondary page frame manager is triggered to perform S909 and S910, and then the page allocator performs S912.

S906: The page allocator allocates O first physical pages to the first process.

S907: The first secondary page frame manager obtains M first physical pages.

S908: The first secondary page frame manager divides the M first physical pages into P second physical pages based on the second granularity, and creates corresponding P pieces of second page frame metadata.

S909: The second secondary page frame manager obtains K first physical pages.

S910: The second secondary page frame manager divides the K first physical pages into H third physical pages based on the third granularity, and creates corresponding H pieces of second page frame metadata.

S911: The page allocator allocates Q second physical pages to the first process.

S912: The page allocator allocates G third physical pages to the first process.

It should be understood that for descriptions of S906 to S912, refer to the foregoing descriptions. For brevity, details are not described herein again.

Optionally, the primary page frame manager, the first secondary page frame manager, and the second secondary page frame manager may divide managed physical pages into physical blocks of different sizes by using a buddy algorithm, so that the page allocator allocates an appropriate physical block to the first process based on the size of the physical memory required by the first process. For specific descriptions, refer to the foregoing descriptions. For brevity, details are not described herein again.

The foregoing describes the memory management method provided in embodiments of this application from a perspective of various functional modules in the computer device. The following describes the memory management method provided in embodiments of this application from a perspective of the computer device.

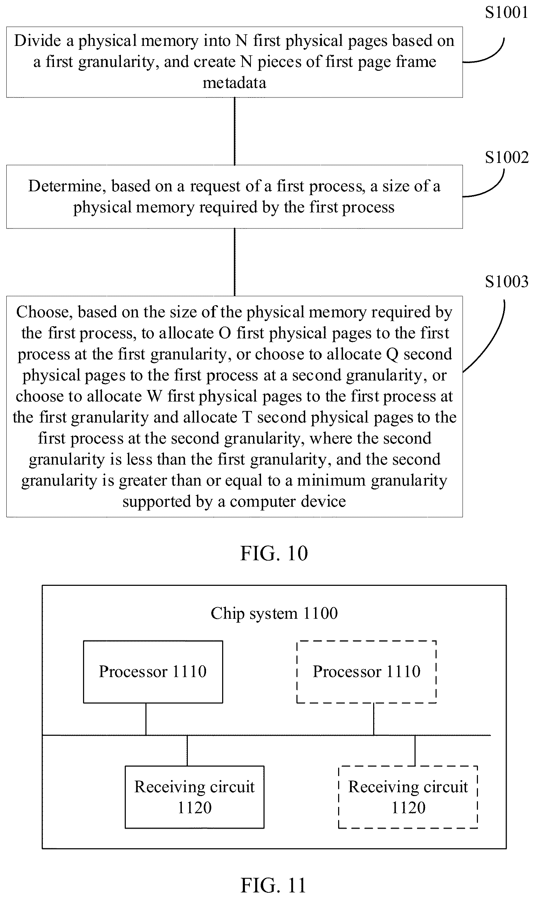

FIG. 10 is a schematic flowchart of a memory management method according to an embodiment of this application. The method is applied to a computer device. As shown in FIG. 10, the method includes the following steps.

S1001: Divide a physical memory into N first physical pages based on a first granularity, and create N pieces of first page frame metadata.

Specifically, when an operating system is started, the computer device may scan the physical memory, divide the physical memory into the N first physical pages based on the first granularity, and create the N pieces of first page frame metadata. The N pieces of first page frame metadata are in one-to-one correspondence with the N first physical pages, and $N \geq 1$ and is an integer.

Optionally, each of the N pieces of first page frame metadata includes a first field, and the first field indicates a size of a physical page corresponding to each piece of first page frame metadata.

For example, if a value of the first field of each piece of first page frame metadata is "00000100", the size of the physical page corresponding to each piece of first page frame metadata is 64 KB.

Optionally, each of the N pieces of first page frame metadata includes a second field, and the second field indicates validity of each piece of first page frame metadata.

For example, if a value of the second field of each piece of first page frame metadata is "1", it may indicate that each piece of first page frame metadata is valid metadata.

Optionally, each of the N pieces of first page frame metadata includes a third field, and the third field indicates whether the first page frame metadata is created by the computer device through a primary page frame manager.

For example, if a value of the third field of each piece of first page frame metadata is "0", it may indicate that each piece of first page frame metadata is created by the computer device through the primary page frame manager.

S1002: Determine, based on a request of a first process, a size of a physical memory required by the first process.

Specifically, when the first process initiates a memory request, the computer device may determine, based on the request of the first process, the size of the physical memory required by the first process.

S1003: Choose, based on the size of the physical memory required by the first process, to allocate O first physical pages to the first process at the first granularity, or choose to allocate Q second physical pages to the first process at a second granularity, or choose to allocate W first physical pages to the first process at the first granularity and allocate T second physical pages to the first process at the second granularity, where the second granularity is less than the first granularity, and the second granularity is greater than or equal to a minimum granularity supported by the computer device.

Specifically, the computer device may select physical pages of different granularities for the first process based on the size of the physical memory required by the first process.

Optionally, in some embodiments, when the size of the physical memory required by the first process is greater than or equal to the first granularity, the computer device may choose to allocate the O second physical pages to the first process at the first granularity.

For example, if the first granularity is 64 KB, and the size of the physical memory required by the first process is 128 KB, the page allocator may allocate, to the first process, two physical pages whose granularities are 64 KB.

Optionally, in some embodiments, when the size of the physical memory required by the first process is less than the first granularity, the computer device may choose to allocate the Q second physical pages to the first process at the second granularity.

For example, if the first granularity is 64 KB, the second granularity is 4 KB, and the size of the physical memory required by the first process is 32 KB, the page allocator may allocate, to the first process, eight physical pages whose granularities are 4 KB.

Optionally, in some embodiments, when the size of the physical memory required by the first process is greater than the first granularity, the computer device may choose to allocate the W first physical pages to the first process at the first granularity and allocate the T second physical pages to the first process at the second granularity.

For example, if the first granularity is 64 KB, the second granularity is 4 KB, and the size of the physical memory required by the first process is 132 KB, the page allocator may allocate, to the first process, two physical pages whose granularities are 64 KB and one physical page whose granularity is 4 KB.

It should be noted that when allocating the physical page to the first process at the second granularity, the computer may determine a size of the second granularity based on a secondary page frame manager configured by the computer.

For example, if the first granularity is 64 KB, the size of the physical memory required by the first process is 16 KB, the computer device is configured with one secondary page frame manager, and a granularity corresponding to the secondary page frame manager is 4 KB, the computer device may allocate, to the first process, four physical pages whose granularities are 4 KB.

For another example, if the first granularity is 64 KB, the size of the physical memory required by the first process is 16 KB, the computer device is configured with two secondary page frame managers, and granularities corresponding to the two secondary page frame managers are respectively 8 KB and 4 KB, the computer device may allocate, to the first process, two physical pages whose granularities are 8 KB, or may allocate, to the first process, four physical pages whose granularities are 4 KB.

In this embodiment of this application, the page frame metadata is first created for the physical memory based on a huge page granularity, and then whether to further refine the physical page is determined based on the size of the physical memory required by the first process, so that management overheads of the page frame metadata can be reduced, and a physical page that meets a granularity of the first process can be quickly allocated.

Optionally, in some embodiments, choosing to allocate the Q second physical pages to the first process at the second granularity includes:

selecting M first physical pages from the N first physical pages, where N≥M≥1, and M is an integer;

converting the M first physical pages into P second physical pages based on the second granularity, and creating corresponding P pieces of second page frame metadata, where P>M>1, P is an integer, and each of the P pieces of second page frame metadata includes a first field to indicate a size of a physical page corresponding to each piece of second page frame metadata; and

selecting the Q second physical pages from the P second physical pages, and allocating the Q second physical pages to the first process.

Specifically, the computer device may select the M first physical pages from the N first physical pages; convert the selected M first physical pages into the P second physical pages based on the second granularity, and create the corresponding P pieces of second page frame metadata; and then select the Q second physical pages from the P second physical pages, and allocate the Q second physical pages to the first process.

Optionally, in some embodiments, choosing to allocate the W first physical pages to the first process at the first granularity and allocate the T second physical pages to the first process at the second granularity includes:

selecting the W first physical pages from the N first physical pages, and allocating the W first physical pages to the first process, where N≥W≥1, and W is an integer;

selecting S first physical pages from N-W first physical pages, where N-W≥S≥1, and S is an integer;

converting the S first physical pages into D second physical pages based on the second granularity, and creating corresponding D pieces of second page frame metadata, where D>S>1, D is an integer, and each of the D pieces of second page frame metadata includes a first field to indicate a size of a physical page corresponding to each piece of second page frame metadata; and

selecting the T second physical pages from the D second physical pages, and allocating the T second physical pages to the first process.

Specifically, when the physical memory required by the first process is greater than the first granularity, the computer device may allocate the W first physical pages from the N first physical pages to the first process. In this case, physical memories of the W first physical pages are less than the physical memory required by the first process, and physical memories of W+1 first physical pages are greater than the physical memory required by the first process. Because the physical memories of the W first physical pages are less than the physical memory required by the first process, the computer device may select the S first physical pages from the N-W first physical pages, convert the S first physical pages into the D second physical pages, and then allocate the T second physical pages from the D second physical pages to the first process.

In this embodiment of this application, an appropriate physical page may be allocated to the first process based on the size of the physical memory required by the first process. When the physical memory required by the first process is greater than the first granularity, physical pages of different granularities may be allocated to the first process, that is, a requirement of the physical memory of the first process is met, and a waste of the physical memory can also be avoided, thereby improving an allocation rate of the physical memory. Optionally, each of the P pieces of second page frame metadata includes a first field, and the first field indicates a size of a physical page corresponding to each piece of second page frame metadata.

For example, if a value of the first field of each piece of second page frame metadata is "00000000", the size of the physical page corresponding to each piece of second page frame metadata is 4 KB.

Optionally, each of the P pieces of second page frame metadata includes a second field, and the second field indicates validity of each piece of second page frame metadata.

For example, if a value of the second field of each piece of second page frame metadata is "1", it may indicate that each piece of second page frame metadata is valid metadata.

Optionally, each of the P pieces of second page frame metadata includes a third field, and the third field indicates whether the second page frame metadata is created by the computer device through the primary page frame manager.

For example, if a value of the third field of each piece of second page frame metadata is "1", it may indicate that each piece of second page frame metadata is created by the computer device through the secondary page frame manager.

Optionally, in some embodiments, the P pieces of second page frame metadata may be stored on any one of the P second physical pages.

Optionally, in some embodiments, the computer device may manage states of the P second physical pages by using a bitmap, that is, determine, by using the bitmap, whether the P second physical pages are used. For example, when the P second physical pages are not allocated, values corresponding to the P second physical pages in the bitmap are "0"; or when the P second physical pages are all allocated, values corresponding to the P second physical pages in the bitmap are "1".

It should be understood that for descriptions of the D pieces of second page frame metadata, refer to descriptions of the P pieces of second page frame metadata. For brevity, details are not described herein again.

It should be noted that, when the computer device does not use the buddy algorithm, after the computer device divides the M first physical pages into the P second physical pages based on the second granularity, and creates the corresponding P pieces of second page frame metadata, the computer device may change a value of a second field of each of the M pieces of first page frame metadata corresponding to the M first physical pages, to indicate that the M pieces of first page frame metadata are invalid metadata, that is, the M first physical pages have been divided.

When the computer device uses the buddy algorithm, the computer device may newly add one fourth field to page frame metadata of each first physical page, and the fourth field indicates whether the physical page is divided. After the computer device divides the M first physical pages into the P second physical pages based on the second granularity, and creates the corresponding P pieces of second page frame metadata, the computer device may change a value of a fourth field of each of the M pieces of first page frame metadata corresponding to the M first physical pages, to indicate that the M first physical pages have been divided.

Optionally, in some embodiments, before selecting the Q second physical pages from the P second physical pages, and allocating the Q second physical pages to the first process, the method further includes:

converting the P second physical pages into R physical blocks by using a buddy algorithm, where the R physical blocks correspond to R pieces of fourth page frame metadata, each of the R pieces of fourth page frame metadata includes a first field to indicate a size of a physical block corresponding to each piece of fourth page frame metadata, and each of the R pieces of fourth page frame metadata includes a second field to indicate that each piece of fourth page frame metadata is valid metadata; and

selecting the Q second physical pages from the P second physical pages, and allocating the Q second physical pages to the first process includes:
selecting a second physical block from the R physical blocks, and allocating the second physical block to the first process, where the second physical block includes the Q second physical pages.

Specifically, the computer device may group the P second physical pages into a plurality of linked lists. The P second physical pages grouped into 11 linked lists are used as an example. Each linked list includes consecutive first physical pages whose sizes are 1, 2, 4, 8, 16, 32, 64, 128, 256, 512, and 1024. The second granularity being 4 KB is used as an example. Corresponding sizes are 4 KB, 8 KB, 16 KB, 32 KB, 64 KB, 128 KB, 256 KB, 512 KB, 1 MB, 2 MB, and 4 MB. That is, the computer device divides the P second physical pages into the R physical blocks by using the buddy algorithm, and the R physical blocks include physical blocks of different sizes, so that the computer device can select an appropriate block based on the size of the physical memory required by the first process, and allocate the block to the first process, where P≥R≥1, and R is an integer. The physical block may be understood as a physical memory including a plurality of consecutive physical pages.

For example, the first process requests four second physical pages, and the computer device may allocate, to the first process, a physical block whose size is four second physical pages.

For another example, the first process requests five second physical pages, and the computer device may allocate, to the first process, a physical block whose size is eight second physical pages.

The R pieces of fourth page frame metadata may be generated in the following several manners.

In a possible implementation, the computer device creates the R pieces of fourth page frame metadata.

Optionally, each of the R pieces of fourth page frame metadata includes a first field, to indicate a size of a physical block corresponding to each piece of fourth page frame metadata.

Optionally, each of the R pieces of fourth page frame metadata includes a second field, to indicate that each piece of fourth page frame metadata is valid page frame metadata.

Optionally, each of the R pieces of fourth page frame metadata includes a third field, to indicate that each piece of fourth page frame metadata is created by the primary page frame manager.

It may be understood that, in this implementation, the primary page frame manager may change values of second fields of original P pieces of second page frame metadata (for example, change from "0" to "1"), to indicate that the P pieces of second page frame metadata are invalid page frame metadata.

In a possible implementation, the primary page frame manager obtains the R pieces of fourth page frame metadata based on R pieces of second page frame metadata in the P pieces of second page frame metadata.

The computer device reuses the R pieces of second page frame metadata in the original P pieces of second page frame metadata. When reusing the R pieces of second page frame metadata, the computer device may change values of first fields of the R pieces of second page frame metadata, to indicate sizes of physical blocks corresponding to the R pieces of second page frame metadata (namely, the R pieces of fourth page frame metadata). In addition, the primary page frame manager may further change values of second fields of P-R pieces of second page frame metadata that are not reused (for example, change from "1" to "0"), to indicate that the P-R pieces of second page frame metadata are invalid page frame metadata.

Optionally, in some embodiments, before choosing to allocate the O first physical pages to the first process at the first granularity, the method further includes:

converting the N first physical pages into L physical blocks by using a buddy algorithm, where the L physical blocks correspond to L pieces of third page frame metadata, each of the L pieces of third page frame metadata includes a first field to indicate a size of a physical block corresponding to each piece of third page frame metadata, and each of the L pieces of third page frame metadata includes a second field to indicate that each piece of third page frame metadata is valid metadata; and

choosing to allocate the O first physical pages to the first process at the first granularity includes:

selecting a first physical block from the L physical blocks, and allocating the first physical block to the first process, where the first physical block includes the O first physical pages.

Specifically, the computer device may group the N first physical pages into a plurality of linked lists. The N first physical pages grouped into 11 linked lists are used as an example. Each linked list includes consecutive first physical pages whose sizes are 1, 2, 4, 8, 16, 32, 64, 128, 256, 512, and 1024. The first granularity being 64 KB is used as an example. Corresponding sizes are 64 KB, 128 KB, 256 KB, 512 KB, 1 MB, 2 MB, 4 MB, 8 MB, 16 MB, 32 MB, and 64 MB. That is, the computer device divides the N first physical pages into the L physical blocks by using the buddy algorithm, and the L physical blocks include physical blocks of different sizes, so that the computer device can select an appropriate block based on the size of the physical memory required by the first process, and allocate the block to the first process, where $N \geq L \geq 1$, and L is an integer.

For example, the first process requests four first physical pages, and the page allocator may allocate, to the first process, a physical block whose size is four first physical pages.

For another example, the first process requests five first physical pages, and the page allocator may allocate, to the first process, a physical block whose size is eight first physical pages.

The L pieces of third page frame metadata may be generated in the following several manners.

In a possible implementation, the primary page frame manager creates the L pieces of third page frame metadata.

Optionally, each of the L pieces of third page frame metadata includes a first field, to indicate a size of a physical block corresponding to each piece of third page frame metadata.

Optionally, each of the L pieces of third page frame metadata includes a second field, to indicate that each piece of third page frame metadata is valid page frame metadata.

Optionally, each of the L pieces of third page frame metadata includes a third field, to indicate that each piece of third page frame metadata is created by the primary page frame manager.

It may be understood that, in this implementation, the primary page frame manager may change values of second fields of original N pieces of first page frame metadata (for example, change from "0" to "1"), to indicate that the N pieces of first page frame metadata are invalid page frame metadata.

In a possible implementation, the primary page frame manager obtains the L pieces of third page frame metadata based on L pieces of first page frame metadata.

The computer device reuses the L pieces of first page frame metadata in the original N pieces of first page frame metadata. When reusing the L pieces of first page frame metadata, the primary page frame manager may change values of first fields of the L pieces of first page frame metadata, to indicate sizes of physical blocks corresponding to the L pieces of first page frame metadata (namely, the L pieces of third page frame metadata). In addition, the primary page frame manager may further change values of second fields of N-L pieces of first page frame metadata that are not reused (for example, change from "1" to "0"), to indicate that the N-L pieces of first page frame metadata are invalid metadata.

Optionally, in some embodiments, the computer device allocates the O first physical pages to the first process at the first granularity, and the method further includes:

when detecting that a first preset condition is met, reclaiming the O first physical pages.

Specifically, when detecting that the first preset condition is met, the computer device may reclaim the O first physical pages.

For descriptions of the first preset condition, refer to the foregoing descriptions. For brevity, details are not described herein again.

Optionally, in some embodiments, the computer device allocates the Q second physical pages to the first process at the second granularity, and the method further includes:

when detecting that a first preset condition is met, reclaiming the Q second physical pages.

Optionally, in some embodiments, the method further includes:

re-converting the P second physical pages into the M first physical pages, and releasing the P pieces of second page frame metadata.

Specifically, after the computer device reclaims the Q second physical pages, a total of P second physical pages are not allocated. In this case, the computer device may re-convert the P second physical pages into the M first physical pages, and then release the P pieces of second page frame metadata.

It may be understood that after re-converting the P second physical pages into the M first physical pages, the computer device may change the second fields of the M pieces of first page frame metadata corresponding to the M first physical pages, to indicate that the M pieces of first page frame metadata are valid page frame metadata.

It should be understood that the specific examples shown in FIG. 4A and FIG. 4B to FIG. 10 in embodiments of this application are merely intended to help a person skilled in the art better understand embodiments of this application, but are not intended to limit the scope of embodiments of this application. It should be further understood that sequence numbers of the foregoing processes do not mean a sequence of performing the processes. The sequence of performing the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The foregoing mainly describes the solutions provided in embodiments of this application from a perspective of the method. To implement the foregoing functions, corresponding hardware structures and/or software modules for performing the functions are included. A person skilled in the art should be easily aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

An embodiment of this application further provides a chip system 1100. As shown in FIG. 11, the chip system 1100 includes at least one processor and at least one interface circuit. In an example, when the chip system 1100 includes one processor and one interface circuit, the processor may be a processor 1110 shown in a solid line box (or a processor 110 shown in a dashed line box) in FIG. 11, and the interface circuit may be an interface circuit 1120 shown in a solid line box (or an interface circuit 1120 shown in a dashed line box) in FIG. 11.

When the chip system 1100 includes two processors and two interface circuits, the two processors include a processor 1110 shown in a solid line box and a processor 1110 shown in a dashed line box in FIG. 11, and the two interface circuits include an interface circuit 1120 shown in a solid line box and an interface circuit 1120 shown in a dashed line box in FIG. 11. This is not limited. The processor 1110 and the interface circuit 1120 may be connected to each other through a wire. For example, the interface circuit 1120 may be configured to receive a signal (for example, instructions stored in a storage). For another example, the interface circuit 1120 may be configured to send a signal to another apparatus (for example, the processor 1110).

For example, the interface circuit 1120 may read instructions stored in the storage, and send the instructions to the processor 1110. When the instructions are executed by the processor 1110, a memory access apparatus or a memory access apparatus may be enabled to perform the steps in the foregoing embodiments. Certainly, the chip system 1100 may further include another discrete component. This is not specifically limited in this embodiment of this application.

Another embodiment of this application further provides a computer-readable storage medium. The computer-readable storage medium stores instructions; and when the instructions are run on a memory access apparatus, the memory access apparatus performs the steps performed by the memory access apparatus in the method procedure shown in the foregoing method embodiments. In some embodiments, the disclosed method may be implemented as computer program instructions encoded in a machine-readable format on a computer-readable storage medium or encoded on another non-transitory medium or product.

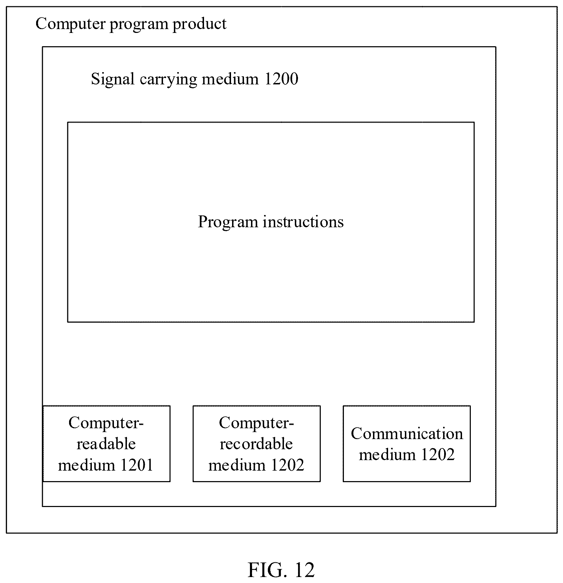

FIG. 12 schematically shows a conceptual partial view of a computer program product according to an embodiment of this application. The computer program product includes a computer program used to execute a computer process on a computing device.

In an embodiment, the computer program product is provided by using a signal carrying medium 1200. The signal carrying medium 1200 may include one or more program instructions. When the program instructions are run by one or more processors, the memory management method provided in embodiments of this application may be performed.

In some examples, the signal carrying medium 1200 may include a computer-readable medium 1201, for example, but not limited to, a hard disk drive, a compact disc (CD), a digital video disc (DVD), a digital tape, a storage, a read-only memory (read-only memory, ROM), or a random access memory (random access memory, RAM).

In some implementations, the signal carrying medium 1200 may include a computer-recordable medium 1202, for example, but not limited to, a storage, a read/write (R/W) CD, or an R/W DVD.

In some implementations, the signal carrying medium 1200 may include a communication medium 1203, for example, but not limited to, a digital and/or analog communication medium (for example, an optical fiber, a waveguide, a wired communication link, or a wireless communication link). The signal carrying medium 1200 may be conveyed by the communication medium 1203 in a wireless form (for example, a wireless communication medium that complies with the IEEE 1502. 11 standard or another transmission protocol). The one or more program instructions may be, for example, computer-executable instructions or logic implementation instructions.

In some examples, the memory management apparatus may be configured to provide various operations, functions, or actions in response to the one or more program instructions in the computer-readable medium 1201, the computer-recordable medium 1202, and/or the communication medium 1203.

It should be understood that the arrangement described herein is merely used as an example. Therefore, a person skilled in the art understands that another arrangement and another element (for example, a machine, an interface, a function, a sequence, and a functional group) can be used instead, and some elements may be omitted together based on a desired result. In addition, many of the described elements are functional entities that can be implemented as discrete or distributed components, or implemented in any appropriate combination at any appropriate location in combination with another component.

All or some of the foregoing embodiments may be implemented by software, hardware, firmware, or any combination thereof. When a software program is used to implement embodiments, embodiments may be implemented completely or partially in a form of a computer program product. The computer program product includes one or more computer instructions. When the computer-executable instructions are executed on a computer, all or some of the procedures or functions according to embodiments of this application are generated. The computer may be a general-purpose computer, a dedicated computer, a computer network, or other programmable apparatuses.

The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A memory management method, wherein the method is applied to a computer device, and the method comprises:

    dividing a physical memory into N first physical pages based on a first granularity, and creating N pieces of first page frame metadata corresponding to the N first physical pages, wherein the first granularity is greater than a minimum granularity supported by the computer device, N≥1 and is an integer, and each of the N pieces of first page frame metadata comprises a first field to indicate a size of a corresponding first physical page; determining, based on a request of a first process, a size of a physical memory required by the first process; and choosing, based on the size of the physical memory required by the first process, to allocate O first physical pages to the first process at the first granularity, or choosing to allocate Q second physical pages to the first process at a second granularity, or choosing to allocate W first physical pages to the first process at the first granularity and allocate T second physical pages to the first process at the second granularity, wherein the second granularity is less than the first granularity, the second granularity is greater than or equal to the minimum granularity supported by the computer device, N≥O≥1, O is an integer, Q≥1, Q is an integer, N≥W≥1, W is an integer, T≥1, and T is an integer.

2. The method according to claim 1, wherein choosing to allocate the Q second physical pages to the first process at the second granularity comprises:

selecting M first physical pages from the N first physical pages, wherein N≥M≥1, and M is an integer; converting the M first physical pages into P second physical pages based on the second granularity, and creating P pieces of corresponding second page frame metadata, wherein P>M>1, P is an integer, and each of the P pieces of second page frame metadata comprises a first field to indicate a size of a corresponding second physical page; and selecting the Q second physical pages from the P second physical pages, and allocating the Q second physical pages to the first process.

3. The method according to claim 2, wherein each of the N pieces of first page frame metadata comprises a second field to indicate that the N pieces of first page frame metadata are valid page frame metadata; and after converting the M first physical pages into the P second physical pages based on the second granularity, the method further comprises: changing a value of a second field of each of M pieces of first page frame metadata corresponding to the M first physical pages, to indicate that the M first physical pages are invalid page frame metadata.

4. The method according to claim 3, wherein the method further comprises:

when detecting that a first preset condition is met, reclaiming the Q second physical pages; re-converting the P second physical pages into the M first physical pages, and releasing the P pieces of second page frame metadata; and changing the value of the second field of each of the M pieces of first page frame metadata corresponding to the M first physical pages, to indicate that the M first physical pages are valid page frame metadata.

5. The method according to claim 1, wherein choosing to allocate the W first physical pages to the first process at the first granularity and allocate the T second physical pages to the first process at the second granularity comprises:

selecting the W first physical pages from the N first physical pages, and allocating the W first physical pages to the first process, wherein N≥W≥1, and W is an integer; selecting S first physical pages from N-W first physical pages, wherein N-W≥S≥1, and S is an integer; converting the S first physical pages into D second physical pages based on the second granularity, and creating D pieces of corresponding second page frame metadata, wherein D>S>1, D is an integer, and each of the D pieces of second page frame metadata comprises a first field to indicate a size of a corresponding second physical page; and selecting the T second physical pages from the D second physical pages, and allocating the T second physical pages to the first process.

6. The method according to any one of claims 1 to 5, wherein each of the N pieces of first page frame metadata comprises the second field to indicate that the N pieces of first page frame metadata are the valid page frame metadata; and before choosing to allocate the O first physical pages to the first process at the first granularity, the method further comprises:

converting the N first physical pages into L physical blocks by using a buddy algorithm, wherein the L physical blocks correspond to L pieces of third page frame metadata, each of the L pieces of third page frame metadata comprises a first field to indicate a size of a corresponding physical block, and each of the L pieces of third page frame metadata comprises a second field to indicate that each piece of third page frame metadata is valid page frame metadata; and

choosing to allocate the O first physical pages to the first process at the first granularity comprises:

selecting a first physical block from the L physical blocks, and allocating the first physical block to the first process, wherein the first physical block comprises the O first physical pages.

7. The method according to claim 6, wherein the L pieces of third page frame metadata are obtained based on L pieces of first page frame metadata in the N pieces of first page frame metadata, and the method further comprises:
changing a value of a second field of each of N-L pieces of first page frame metadata, to indicate that the N-L pieces of first page frame metadata are invalid page frame metadata.

8. The method according to claim 2, wherein each of the P pieces of second page frame metadata comprises a second field to indicate that the P pieces of second page frame metadata are valid page frame metadata; and before selecting the Q second physical pages from the P second physical pages, and allocating the Q second physical pages to the first process, the method further comprises:

converting the P second physical pages into R physical blocks by using a buddy algorithm, wherein the R physical blocks correspond to R pieces of fourth page frame metadata, each of the R pieces of fourth page frame metadata comprises a first field to indicate a size of a corresponding physical block, and each of the R pieces of fourth page frame metadata comprises a second field to indicate that each piece of fourth page frame metadata is valid page frame metadata; and

selecting the Q second physical pages from the P second physical pages, and allocating the Q second physical pages to the first process comprises:

selecting a second physical block from the R physical blocks, and allocating the second physical block to the first process, wherein the first physical block comprises the Q second physical pages.

9. The method according to claim 8, wherein the R pieces of fourth page frame metadata are obtained based on R pieces of second page frame metadata in the P pieces of second page frame metadata, and the method further comprises:
changing a value of a second field of each of P-R pieces of second page frame metadata, to indicate that the P-R pieces of second page frame metadata are invalid page frame metadata.

10. The method according to claim 8 or 9, wherein each of the N pieces of first page frame metadata comprises a fourth field to indicate whether the first physical pages corresponding to the N pieces of first page frame metadata are divided; and after converting the M first physical pages into the P second physical pages, the method further comprises:
changing a value of the fourth field of each piece of page frame metadata of M pieces of first page frame metadata corresponding to the M first physical pages, to indicate that the M first physical pages have been divided.

11. The method according to any one of claims 2 to 4 or 8 to 10, wherein the P pieces of second page frame metadata are stored on any one of the P second physical pages.

12. The method according to any one of claims 1 to 11, wherein when choosing to allocate the O first physical pages to the first process at the first granularity, the method further comprises:
when detecting that the first preset condition is met, reclaiming the O first physical pages.

13. The method according to any one of claims 1 to 12, wherein each of the N pieces of first page frame metadata comprises a third field to indicate that the N pieces of first page frame metadata are created by a primary page frame manager.

14. A memory management method, wherein the method is applied to a computer device, the computer device comprises a primary page frame manager, a first secondary page frame manager, and a page allocator, the primary page frame manager is configured to manage a first physical page of a first granularity, and the first secondary page frame manager is configured to manage a second physical page of a second granularity;

the primary page frame manager is configured to: divide a physical memory into N first physical pages based on the first granularity, and create N pieces of first page frame metadata corresponding to the N first physical pages, wherein the first granularity is greater than a minimum granularity supported by the computer device, N≥1 and is an integer, and each of the N pieces of first page frame metadata comprises a first field to indicate a size of a corresponding first physical page;

the page allocator is configured to determine, based on a request of a first process, a size of a physical memory required by the first process; and

the page allocator is further configured to: choose, based on the size of the physical memory required by the first process, to allocate O first physical pages to the first process at the first granularity, or choose to allocate Q second physical pages to the first process at the second granularity, or choose to allocate W first physical pages to the first process at the first granularity and allocate T second physical pages to the first process at the second granularity, wherein the second granularity is less than the first granularity, the second granularity is greater than or equal to the minimum granularity supported by the computer device, $N \geq O \geq 1$, O is an integer, $Q \geq 1$, Q is an integer, $N \geq W \geq 1$, W is an integer, $T \geq 1$, and T is an integer.

15. The method according to claim 14, wherein when the page allocator chooses to allocate the Q second physical pages to the first process at the second granularity, the first secondary page frame manager is configured to:

    select M first physical pages from the N first physical pages, wherein $N \geq M \geq 1$, and M is an integer; and
    convert the M first physical pages into P second physical pages based on the second granularity, and create P pieces of corresponding second page frame metadata, wherein $P > M > 1$, P is an integer, and each of the P pieces of second page frame metadata comprises a first field to indicate a size of a corresponding second physical page; and
    the page allocator is specifically configured to: select the Q second physical pages from the P second physical pages, and allocate the Q second physical pages to the first process.

16. The method according to claim 15, wherein each of the N pieces of first page frame metadata comprises a second field to indicate that the N pieces of first page frame metadata are valid page frame metadata; and after converting the M first physical pages into the P second physical pages based on the second granularity, the primary page frame manager is further configured to change a value of a second field of each of M pieces of first page frame metadata corresponding to the M first physical pages, to indicate that the M first physical pages are invalid page frame metadata.

17. The method according to claim 16, wherein when the page allocator chooses to allocate the Q second physical pages to the first process at the second granularity, the page allocator is further configured to: when detecting that a first preset condition is met, determine the first secondary page frame manager;
    the first secondary page frame manager is further configured to:

    reclaim the Q second physical pages; and
    re-convert the P second physical pages into the M first physical pages, and release the P pieces of second page frame metadata; and
    the primary page frame manager is further configured to change the value of the second field of each of the M pieces of first page frame metadata corresponding to the M first physical pages, to indicate that the M first physical pages are valid page frame metadata.

18. The method according to claim 14, wherein when the page allocator chooses to allocate the W first physical pages to the first process at the first granularity and allocate the T second physical pages to the first process at the second granularity, the page allocator is specifically configured to: select the W first physical pages from the N first physical pages, and allocate the W first physical pages to the first process, wherein $N \geq W \geq 1$, and W is an integer;
    the first secondary page frame manager is configured to:

    select S first physical pages from N-W first physical pages, wherein $N-W \geq S \geq 1$, and S is an integer; and
    convert the S first physical pages into D second physical pages based on the second granularity, and create D pieces of corresponding second page frame metadata, wherein $D > S > 1$, D is an integer, and each of the D pieces of second page frame metadata comprises a first field to indicate a size of a corresponding second physical page; and
    the page allocator is specifically configured to: select the T second physical pages from the D second physical pages, and allocate the T second physical pages to the first process.

19. The method according to any one of claims 14 to 18, wherein each of the N pieces of first page frame metadata comprises the second field to indicate that the N pieces of first page frame metadata are the valid page frame metadata; and before the page allocator chooses to allocate the O first physical pages to the first process at the first granularity, the primary page frame manager is further configured to convert the N first physical pages into L physical blocks by using a buddy algorithm, wherein the L physical blocks correspond to L pieces of third page frame metadata, each of the L pieces of third page frame metadata comprises a first field to indicate a size of a corresponding physical block, and each of the L pieces of third page frame metadata comprises a second field to indicate that each piece of third page frame metadata is valid page frame metadata; and

the page allocator is specifically configured to: select a first physical block from the L physical blocks, and allocate the first physical block to the first process, wherein the first physical block comprises the O first physical pages.

20. The method according to claim 19, wherein the primary page frame manager is further configured to change a value of a second field of each of N-L pieces of first page frame metadata, to indicate that the N-L pieces of first page frame metadata are invalid page frame metadata.

21. The method according to claim 15, wherein each of the P pieces of second page frame metadata comprises a second field to indicate that the P pieces of second page frame metadata are valid page frame metadata; and before the page allocator selects the Q second physical pages from the P second physical pages, and allocates the Q second physical pages to the first process, the first primary page frame manager is further configured to convert the P second physical pages into R physical blocks by using a buddy algorithm, wherein the R physical blocks correspond to R pieces of fourth page frame metadata, each of the R pieces of fourth page frame metadata comprises a first field to indicate a size of a corresponding physical block, and each of the R pieces of fourth page frame metadata comprises a second field to indicate that each piece of fourth page frame metadata is valid page frame metadata; and

the primary page frame manager is specifically configured to: select a second physical block from the R physical blocks, and allocate the second physical block to the first process, wherein the first physical block comprises the Q second physical pages.

22. The method according to claim 21, wherein the first secondary page frame manager is further configured to change a value of a second field of each of P-R pieces of second page frame metadata, to indicate that the P-R pieces of second page frame metadata are invalid page frame metadata.

23. The method according to claim 21 or 22, wherein each of the N pieces of first page frame metadata comprises a fourth field to indicate whether the first physical pages corresponding to the N pieces of first page frame metadata are divided; and after the first secondary page frame manager converts the M first physical pages into the P second physical pages, the primary page frame manager is further configured to change a value of the fourth field of each piece of page frame metadata of M pieces of first page frame metadata corresponding to the M first physical pages, to indicate that the M first physical pages have been divided.

24. The method according to any one of claims 15 to 17 or 21 to 23, wherein the P pieces of second page frame metadata are stored on any one of the P second physical pages.

25. The method according to any one of claims 14 to 24, wherein when the page allocator chooses to allocate the O first physical pages to the first process at the first granularity, the page allocator is further configured to: when detecting that the first preset condition is met, select the primary page frame manager; and

the primary page frame manager is further configured to reclaim the O first physical pages.

26. The method according to any one of claims 14 to 25, wherein each of the N pieces of first page frame metadata comprises a third field to indicate that the N pieces of first page frame metadata are created by the primary page frame manager.

27. A computer device, comprising one or more processors and one or more storages, wherein the one or more storages store one or more computer programs, the one or more computer programs comprise instructions, and when the instructions are executed by the one or more processors, the method according to any one of claims 1 to 13 is performed.

28. A chip, wherein the chip comprises a processor and a communication interface, the communication interface is configured to receive a signal and transmit the signal to the processor, and the processor processes the signal, so that the method according to any one of claims 1 to 13 is performed.

29. A computer-readable storage medium, wherein the computer-readable storage medium stores computer instructions, and when the computer instructions are run on a computer device, the method according to any one of claims 1 to 13 is performed.

Computing device 100

Processor 110

Cache 116

| Processing unit 112 | ... | Processing unit 112 |

Memory control unit 114

...

Processor 110

Cache 116

| Processing unit 112 | ... | Processing unit 112 |

Memory control unit 114

System bus

Memory 120

FIG. 1

| Basic page #1 | |
| :---: | |
| ⋮ | → Metadata page #1 |
| Basic page #64 | |

| Basic page #65 | |
| :---: | |
| ⋮ | → Metadata page #2 |
| Basic page #128 | |

| Basic page #129 | |
| :---: | |
| ⋮ | → Metadata page #3 |
| Basic page #192 | |

| Basic page #193 | |
| :---: | |
| ⋮ | → Metadata page #4 |
| Basic page #256 | |

| Basic page #257 | |
| :---: | |
| ⋮ | → Metadata page #5 |
| Basic page #320 | |

| Basic page #321 | |
| :---: | |
| ⋮ | → Metadata page #6 |
| Basic page #384 | |

| Basic page #385 | |
| :---: | |
| ⋮ | → Metadata page #7 |
| Basic page #448 | |

| Basic page #449 | |
| :---: | |
| ⋮ | → Metadata page #8 |
| Basic page #512 | |

(a)

FIG. 2

Basic page #1
⋮
Basic page #64    → Metadata page #1
Basic page #65
⋮
Basic page #128
Basic page #129    → Metadata page #2
⋮
Basic page #192
Basic page #193    → Metadata page #3
⋮
Basic page #256
Basic page #257    → Metadata page #4
⋮
Basic page #320
Basic page #321    → Metadata page #5
⋮
Basic page #384
Basic page #385    → Metadata page #6
⋮
Basic page #448
Basic page #449    → Metadata page #7
⋮
Basic page #512    → Metadata page #8

(b)

EP 4 693 052 A1

Application
layer

Application

Operating
system layer

Page
allocator

Primary page
frame
manager

Secondary
page frame
manager

...

Secondary
page frame
manager

Hardware
layer

Processor

Memory

FIG. 3

| Primary page frame manager | First secondary page frame manager | Page allocator |
|---|---|---|

S401: Divide a physical memory into N first physical pages based on a first granularity, and create N pieces of first page frame metadata

S402: The first secondary page frame manager is bound to the primary page frame manager

S403: The page allocator is bound to the first secondary page frame manager and the primary page frame manager

S404: Determine the page frame manager based on a request of a first process

S405: Allocate O first physical pages to the first process

S406: Obtain M first physical pages

S407: Divide the M first physical pages into P second physical pages based on a second granularity, and create corresponding P pieces of second page frame metadata

S408: Allocate Q second physical pages to the first process

S409: Allocate W first physical pages to the first process

S410: Obtain S first physical pages

| TO FIG. 4B | TO FIG. 4B | TO FIG. 4B |
|---|---|---|

FIG. 4A

CONT.
FROM
FIG. 4A

CONT.
FROM
FIG. 4A

CONT.
FROM
FIG. 4A

S411: Divide the S first physical
pages into D second physical pages
based on the second granularity,
and create corresponding D pieces
of second page frame metadata

S412: Allocate T second physical
pages to the first process

S413: Detect that a first preset
condition is met, and determine the
page frame manager

S414: Reclaim the O first physical
pages or the W first physical pages

S415: Reclaim the Q second physical
pages or the T second physical pages

S416: Convert the P second physical
pages into the M first physical pages, and
release the P pieces of second page frame
metadata corresponding to the P second
physical pages; or convert the D second
physical pages into the S first physical
pages, and release the D pieces of second
page frame metadata corresponding to the
D second physical pages

S417: The primary page frame
manager obtains the M first
physical pages or the S first
physical pages from the first
secondary page frame manager

FIG. 4B

| First physical page #1 | First physical page #2 | First physical page #3 | First physical page #4 |
|---|---|---|---|

| Second physical page #1 | Second physical page #2 | Second physical page #3 | ... | Second physical page #64 |
|---|---|---|---|---|

FIG. 5

Determine
whether page frame
metadata #1 is first page
frame metadata

S601

No

Yes

Determine a physical address based on an offset of the
page frame metadata #1 in the first page frame metadata

S602

Determine an offset of the page frame metadata #1 in
second page frame metadata

S603

Determine the first page frame metadata corresponding
to the page frame metadata #1

S604

Determine an offset of first page frame metadata #1 in
the first page frame metadata

S605

Determine the physical address based on the offset of the
page frame metadata #1 in the second page frame
metadata and the offset of the first page frame metadata
#1 in the first page frame metadata

S606

FIG. 6

(a)

First physical page #1 ... First physical page #4 ... First physical page #8

Page frame metadata #1

Page frame metadata | Page frame metadata | Page frame metadata | Page frame metadata #1 | Page frame metadata | Page frame metadata | Page frame metadata | Page frame metadata

(b)

First physical page #1 ... First physical page #4 ... First physical page #8

First page frame metadata #1

First page frame metadata | First page frame metadata | First page frame metadata | First page frame metadata | First page frame metadata | First page frame metadata | First page frame metadata

Second physical page #1 | Second physical page #2 | Second physical page #3 ... Second physical page #16

Second page frame metadata #1

Second page frame metadata | Second page frame metadata | Second page frame metadata

FIG. 7

S801

Determine first page frame metadata #1 based on an
offset of a physical address #1

Determine
whether a first physical
page corresponding to the
first page frame metadata
#1 is divided

S802

No

Yes

S803

Determine that the first page frame metadata #1 is page
frame metadata corresponding to the physical address #1

S804

Determine an offset in second page frame metadata

S805

Determine second page frame metadata #1 based on the
offset in the second page frame metadata

FIG. 8

EP 4 693 052 A1

| Primary page frame manager | First secondary page frame manager | First secondary page frame manager | Page allocator |
|---|---|---|---|

S901: Divide a physical memory into N first physical pages based on a first granularity, and create N pieces of first page frame metadata

S902: The first secondary page frame manager is bound to the primary page frame manager

S903: The second secondary page frame manager is bound to the primary page frame manager

S904: The page allocator is bound to the first secondary page frame manager, the second secondary page frame manager, and the primary page frame manager

S905: Determine the page frame manager based on a request of a first process

S906: Allocate O first physical pages to the first process

TO FIG. 9B     TO FIG. 9B     TO FIG. 9B     TO FIG. 9B

FIG. 9A

S907: Obtain M first physical pages

S908: Divide the M first physical pages into P second physical pages based on a second granularity, and create corresponding P pieces of second page frame metadata

S909: Obtain K first physical pages

S910: Divide the K first physical pages into H third physical pages based on a third granularity, and create corresponding H pieces of second page frame metadata

S911: The page allocator allocates Q second physical pages to the first process

S912: The page allocator allocates G third physical pages to the first process

FIG. 9B

EP 4 693 052 A1

S1001

Divide a physical memory into N first physical pages based on a first granularity, and create N pieces of first page frame metadata

S1002

Determine, based on a request of a first process, a size of a physical memory required by the first process

S1003

Choose, based on the size of the physical memory required by the first process, to allocate O first physical pages to the first process at the first granularity, or choose to allocate Q second physical pages to the first process at a second granularity, or choose to allocate W first physical pages to the first process at the first granularity and allocate T second physical pages to the first process at the second granularity, where the second granularity is less than the first granularity, and the second granularity is greater than or equal to a minimum granularity supported by a computer device

FIG. 10

Chip system 1100

Processor 1110

Processor 1110

Receiving circuit 1120

Receiving circuit 1120

FIG. 11

Computer program product

Signal carrying medium 1200

Program instructions

| Computer-readable medium 1201 | Computer-recordable medium 1202 | Communication medium 1202 |

FIG. 12

## INTERNATIONAL SEARCH REPORT

| International application No. |
| --- |
| **PCT/CN2024/079212** |

**A.    CLASSIFICATION OF SUBJECT MATTER**

G06F 12/06(2006.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, CNKI, IEEE: 内存, 物理页, 元数据, 粒度, 大小, 转化, 拆分, 细化, 页框, divid+, memory, page table, scale, separat+, metadata

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111597124 A (CHONGQING UNIVERSITY) 28 August 2020 (2020-08-28) description, paragraphs [0051]-[0090], and figures 1-6 | 1, 12, 13, 14, 25-29 |
| A | CN 107037988 A (HUAZHONG UNIVERSITY OF SCIENCE AND TECHNOLOGY) 11 August 2017 (2017-08-11) entire document | 1-29 |
| A | CN 110674051 A (INSTITUTE OF MICROELECTRONICS OF CHINESE ACADEMY OF SCIENCES) 10 January 2020 (2020-01-10) entire document | 1-29 |
| A | CN 114579482 A (SHANGHAI JIAO TONG UNIVERSITY) 03 June 2022 (2022-06-03) entire document | 1-29 |
| A | US 10042751 B1 (EMC IP HOLDING COMPANY LLC) 07 August 2018 (2018-08-07) entire document | 1-29 |

☐ Further documents are listed in the continuation of Box C.        ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 May 2024** | **30 May 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| | International application No. |
|---|---|
| | **PCT/CN2024/079212** |

| Patent document cited in search report | | | Publication date (day/month/year) | Patent family member(s) | Publication date (day/month/year) |
|---|---|---|---|---|---|
| CN | 111597124 | A | 28 August 2020 | None | |
| CN | 107037988 | A | 11 August 2017 | None | |
| CN | 110674051 | A | 10 January 2020 | None | |
| CN | 114579482 | A | 03 June 2022 | None | |
| US | 10042751 | B1 | 07 August 2018 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310545650